# EUROPEAN PATENT SPECIFICATION

(11) **EP 4 315 493 B1**
(45) Date of publication and mention of the grant of the patent: **03.12.2025**
(21) Application number: 22900795.0
(22) Date of filing: 13.12.2022
(51) Int. Cl.: H01M 50/526, H01M 50/593, H01M 50/586, H01M 50/503, H01M 50/213, H01M 50/51, H01M 50/48, H01M 50/107, H01M 50/50, H01M 50/505, H01M 50/507, H01M 50/516, H01M 50/522, H01M 50/548, H01M 50/534, H01M 50/569, H01M 10/48

(54) **BATTERY MODULE HAVING A LAMINATED BUSBAR ASSEMBLY**
BATTERIEMODUL MIT LAMINIERTER SAMMELSCHIENENANORDNUNG
MODULE DE BATTERIE DOTÉ D'UN ENSEMBLE BARRE OMNIBUS STRATIFIÉ

(43) Date of publication of application: 07.02.2024
(73) Proprietor: LG ENERGY SOLUTION, LTD., Seoul 07335 (KR)
(72) Inventor: YANKOSKI, Edward, West Branch, Michigan 48661 (US); YANG, Heekook, Sterling Heights, Michigan 48313 (US); PORCHELVAN, Sanjeev, Shelby Township, Michigan 48317 (US); DAHITULE, Atish Bharat, Troy, Michigan 48085 (US)
(74) Representative: Goddar, Heinz J.
(86) International application number: PCT/IB2022/062120
(87) International publication number: WO 2023/100165

(56) References cited:
- EP-A1- 3 872 891
- US-A1- 2011 151 315
- US-A1- 2015 340 157
- US-A1- 2018 375 270
- US-A1- 2020 152 936
- US-A1- 2020 203 941
- US-A1- 2020 203 941
- US-A1- 2021 273 298

## Description

### [BACKGROUND ART]

Small battery modules are often manufactured using a wire bonding process with aluminum busbars to generate multiple series and parallel configurations of cylindrical battery cells. However, often the packaging of the cylindrical battery cells in the battery module needs to be modified to obtain a desired series or parallel electrical configuration. Further, the battery modules often have a relatively high height profile. EP 3 872 891 A1 describes a battery module including a busbar having a laminated band. The laminated band comprises a conductive layer laminated between two insulation layers. The conductive layer is composed of multiple conductors and configured to connect to the positive and negative poles of all cells from an array, while respecting the series and parallel connections of each cell. An upper/top insulation layer comprises first holes, and a bottom/lower insulation layer comprises second holes and third holes to reduce the risk of electrical fault when connecting the busbar to a cell array, since the cells usually contain some electrical energy upon manufacturing. Each second hole allows access, from the down side of the laminated band, to a first terminal to be connected to the positive pole of a cell. Each third hole allows access, from a down side of the laminated band, to a second terminal to be connected to the negative pole of a cell. According to a design option, the second and third holes can also be replaced by a single bigger opening.

### [Technical Field]

The inventors herein have recognized a need for an improved battery module that utilizes a laminated busbar assembly that has a relatively low height profile design and that provides both series and parallel electrical configurations of cylindrical battery cells without having to modify the packaging of the battery cells.

### [DISCLOSURE]

### [TECHNICAL PROBLEM]

A battery module in accordance with an exemplary embodiment is provided. The battery module includes a first cylindrical battery cell having a positive electrode and a negative electrode. The battery module further includes a second cylindrical battery cell having a positive electrode and a negative electrode. The battery module further includes a laminated busbar assembly having a bottom isolation layer, a busbar layer, a top isolation layer. The busbar layer is coupled to and between the bottom isolation layer and the top isolation layer. The bottom isolation layer contacts the first and second cylindrical battery cells. The bottom isolation layer has a first aperture and a second aperture extending therethrough. The first aperture of the bottom isolation layer is sized and shaped to receive the positive electrode of the first cylindrical battery cell therethrough and to expose a portion of the negative electrode of the first cylindrical battery cell. The second aperture of the bottom isolation layer is sized and shaped to receive the positive electrode of the second cylindrical battery cell therethrough and to expose a portion of the negative electrode of the second cylindrical battery cell. The top isolation layer has a first aperture and a second aperture extending therethrough. The first and second apertures of the top isolation layer are sized and shaped to match the first and second apertures of the bottom isolation layer. The busbar layer has a first layer portion and a second layer portion. The second layer portion is spaced apart from the first layer portion. The first layer portion is disposed against and electrically contacts the negative electrode of the first cylindrical battery cell and the negative electrode of the second cylindrical battery cell. The second layer portion is disposed against and electrically contacts the positive electrode of the first cylindrical battery cell and the positive electrode of the second cylindrical battery cell such that the first and second cylindrical battery cells are electrically coupled in parallel to one another.

A battery module in accordance with another exemplary embodiment is provided. The battery module includes a first cylindrical battery cell having a positive electrode and a negative electrode. The battery module further includes a second cylindrical battery cell having a positive electrode and a negative electrode. The battery module further includes a laminated busbar assembly having a bottom isolation layer, a busbar layer, a top isolation layer. The busbar layer is coupled to and between the bottom isolation layer and the top isolation layer. The bottom isolation layer contacts the first and second cylindrical battery cells. The bottom layer has a first aperture and a second aperture extending therethrough. The first aperture is sized and shaped to receive the positive electrode of the first cylindrical battery cell therethrough and to expose a portion of the negative electrode of the first cylindrical battery cell. The second aperture is sized and shaped to receive the positive electrode of the second cylindrical battery cell therethrough and to expose a portion of the negative electrode of the second cylindrical battery cell. The top isolation layer has a first aperture and a second aperture extending therethrough. The first and second apertures of the top isolation layer are sized and shaped to match the first and second apertures of the bottom isolation layer. The busbar layer has first, second, and third layer portions that are spaced apart from one another. The first layer portion is disposed against and electrically contacts the negative electrode of the first cylindrical battery cell. The second layer portion is disposed against and electrically contacts the positive electrode of the first cylindrical battery cell and the negative electrode of the second cylindrical battery cell. The third layer portion is disposed against and electrically contacts the positive electrode of the second cylindrical battery cell such that the first and second cylindrical battery cells are electrically coupled in series to one another.

### [Description of Drawings]

FIG. 1 is a schematic of a battery module in accordance with an exemplary embodiment;
FIG. 2 is an isometric view of the battery module of FIG. 1;
FIG. 3 is an exploded view of the battery module of FIG. 1;
FIG. 4 is a cross-sectional view of the battery module of FIG. 3 taken along lines 4-4 in FIG. 1;
FIG. 5 is an isometric view of a battery cell retention frame utilized in the battery module of FIG. 1;
FIG. 6 is an isometric view of the first retention housing utilized in the battery module of FIG. 1 holding a plurality of cylindrical battery cells, first and second retaining plates, and a laminated busbar assembly therein;
FIG. 7 is another isometric view of the first retention housing, the plurality of cylindrical battery cells, the first and second retaining plates of FIG. 6;
FIG. 8 is a partial exploded view of the first retention housing of FIG. 6, the plurality of cylindrical battery cells, the first and second retaining plates, and the laminated busbar assembly;
FIG. 9 is a top view of the first retention housing and the laminated busbar assembly of FIG. 6;
FIG. 10 is a bottom view of the first retention housing, the plurality of cylindrical battery cells, the first and second retaining plates of FIG. 6;
FIG. 11 is an isometric view of the first retention housing of FIG. 6;
FIG. 12 is a top view of the first retention housing of FIG. 11;
FIG. 13 is an isometric view of the plurality of cylindrical battery cells of FIG. 6;
FIG. 14 is a top view of the plurality of cylindrical battery cells of FIG. 13;
FIG. 15 is an isometric view of one of the battery cells in the plurality of cylindrical battery cells of FIG. 13;
FIG. 16 is an isometric view of the first and second retaining plates of FIG. 7;
FIG. 17 is a top view of the first retention housing of FIG. 6 with the plurality of cylindrical battery cells therein;
FIG. 18 is an isometric view of a laminated busbar assembly of FIG. 6;
FIG. 19 is another isometric view of the laminated busbar assembly of FIG. 18;
FIG 20 is a top view of the laminated busbar assembly of FIG. 18;
FIG. 21 is an exploded view of the laminated busbar assembly of FIG. 18;
FIG. 22 is a top view of a bottom isolation layer utilized in the laminated busbar assembly of FIG. 18;
FIG. 23 is an isometric view of a busbar layer utilized in the laminated busbar assembly of FIG. 18;
FIG. 24 is a top view of the busbar layer of FIG. 23;
FIG. 25 is a top view of a top isolation layer utilized in the laminated busbar assembly of FIG. 18;
FIG. 26 is a top view of a sensor layer utilized in the laminated busbar assembly of FIG. 18;
FIG. 27 is an enlarged portion of the bottom isolation layer of FIG. 22;
FIG. 28 is an enlarged portion of the top isolation layer of FIG. 25;
FIG. 29 is an enlarged portion of the busbar layer of FIG. 24;
FIG. 30 is an isometric view of a second retention housing utilized in the battery module of FIG. 1 holding a plurality of cylindrical battery cells, first and second retaining plates, and a laminated busbar assembly therein;
FIG. 31 is another isometric view of the second retention housing, the plurality of cylindrical battery cells, the first and second retaining plates of FIG. 30; and

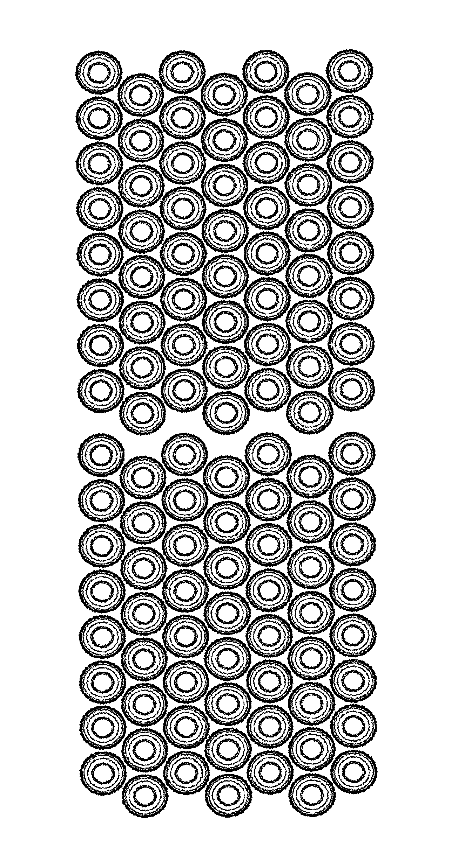

FIG. 32 is an isometric view of the plurality of cylindrical battery cells of FIG. 31.

### [Mode for Invention]

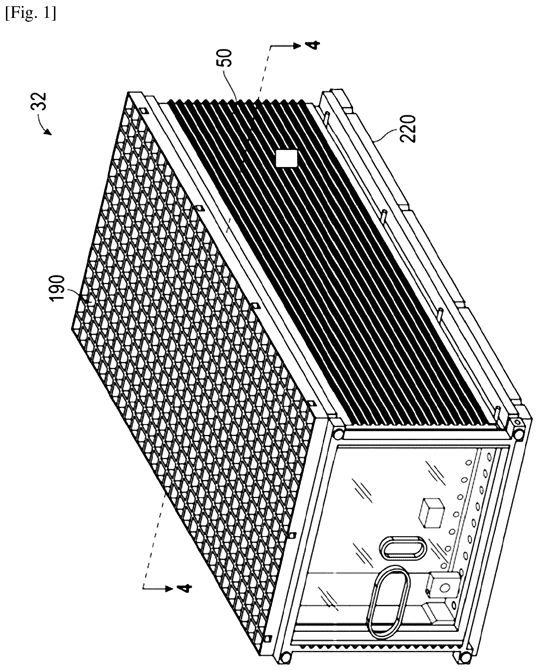

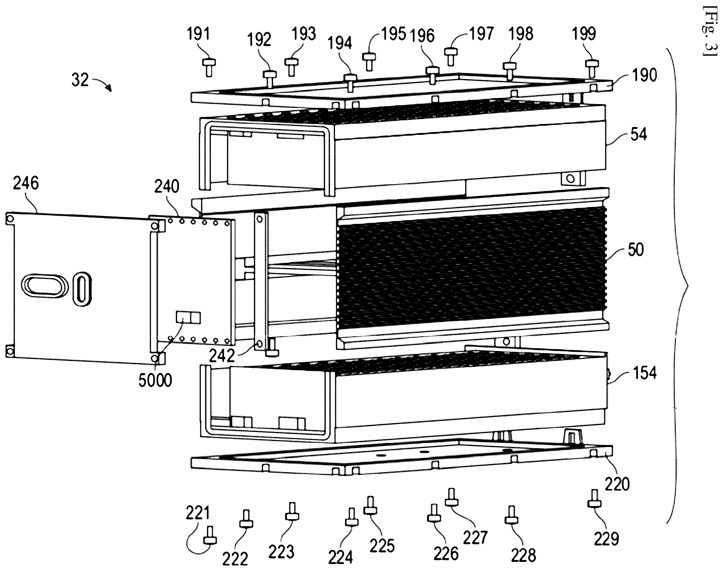

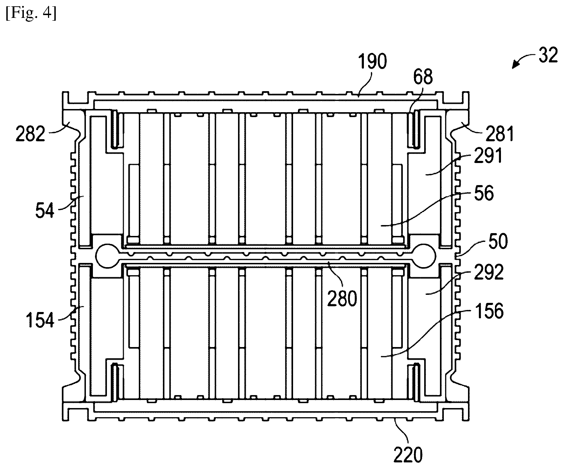

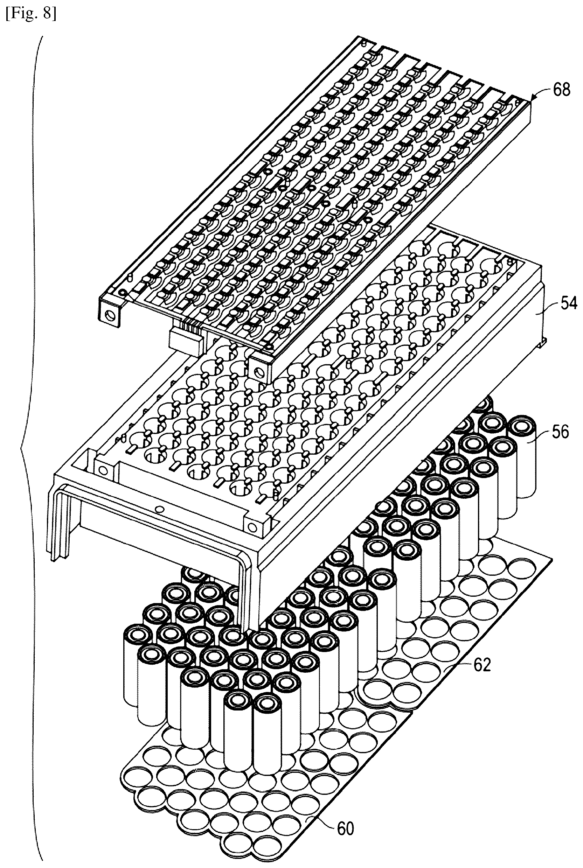

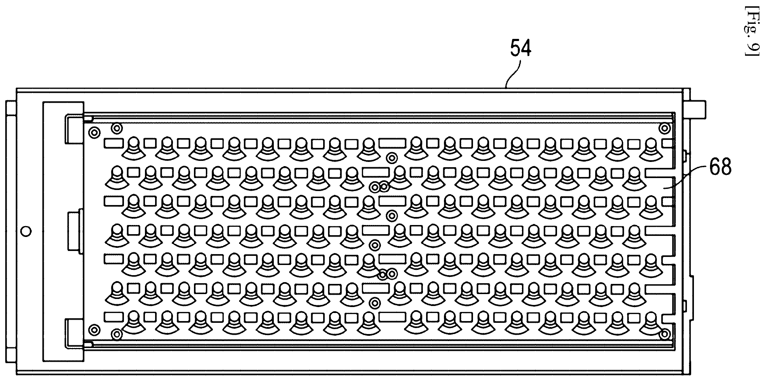

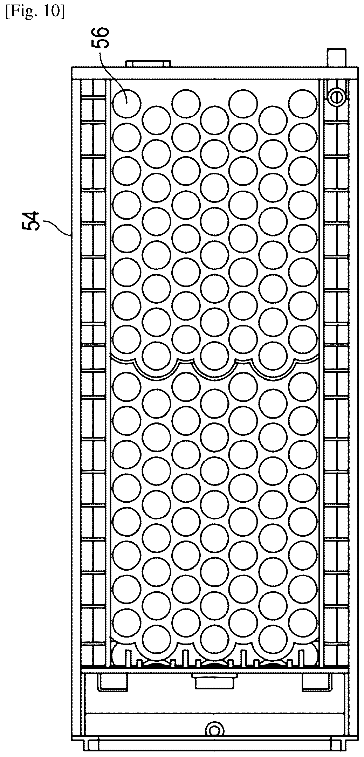

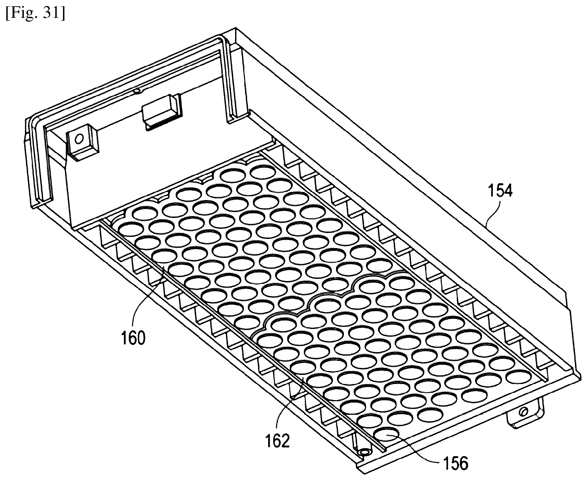

Referring to FIGS. 1-15, a battery module 32 in accordance with an exemplary embodiment is provided. Referring to FIGS. 3 and 4, the battery module 32 includes a battery cell retention frame 50, a first retention housing 54, a plurality of cylindrical battery cells 56, retaining plates 60, 62 (shown in FIG. 8), a laminated busbar assembly 68, a second retention housing 154, a plurality of cylindrical battery cells 156, retaining plates 160, 162 (shown in FIG. 31), a laminated busbar assembly 168, a first outer plate 190, bolts 191, 192, 193, 194, 195, 196, 197, 198, 199, a second outer plate 220, bolts 221, 222, 223, 224, 225, 226, 227, 228, 229, a circuit board 240, an electrical busbar 242, and a cover plate 246.

### Battery cell retention frame

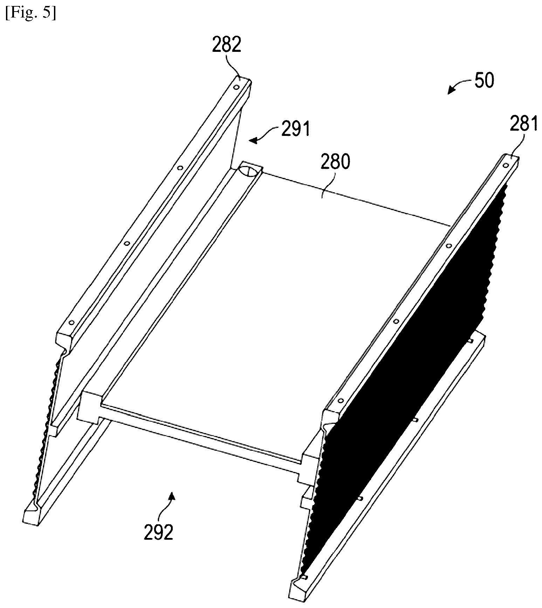

Referring to FIGS. 4 and 5, the battery cell retention frame 50 is provided to hold and to cool the plurality of cylindrical battery cells 56 and the plurality of cylindrical battery cells 156 thereon. The battery cell retention frame 50 includes a central cooling portion 280, a first exterior plate 281, and a second exterior plate 282. The frame 50 can hold and cool the plurality of cylindrical battery cells 56, 156 on opposite sides of the central cooling portion 280 while supporting and protecting the battery cells 56, 156 with the first and second exterior plates 141, 142. In particular, the central cooling portion 280 receives a cooling fluid therethrough that cools the plurality of cylindrical battery cells 56 and the plurality of cylindrical battery cells 156 thereon. In an exemplary embodiment, the first exterior plate 281, and the second exterior plate 282 are constructed of a metal such as aluminum for example. In the exemplary embodiment, the central cooling portion 280 includes an aluminum housing with first and second thermally conductive layers disposed thereon that are constructed of a thermally conductive material that is not electrically conductive that contact the battery cells 56, 156.

### Regions

The first and second exterior plates 141, 142 and the central cooling portion 280 define a first region 291 for receiving the plurality of cylindrical battery cells 56 therein. Further, the first and second exterior plates 141, 142 and the central cooling portion 280 define a second region 292 for receiving the plurality of cylindrical battery cells 156 therein.

### First retention housing

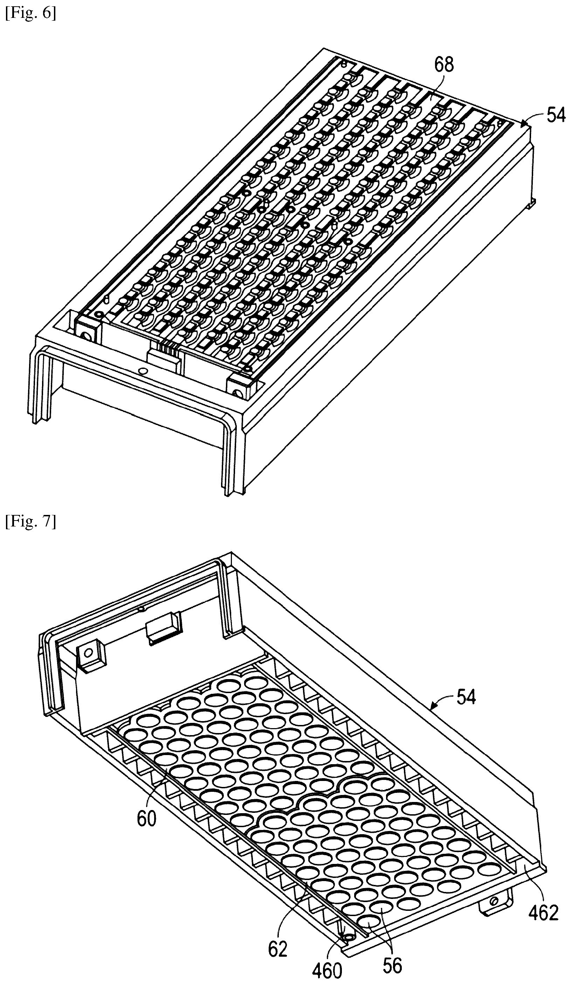

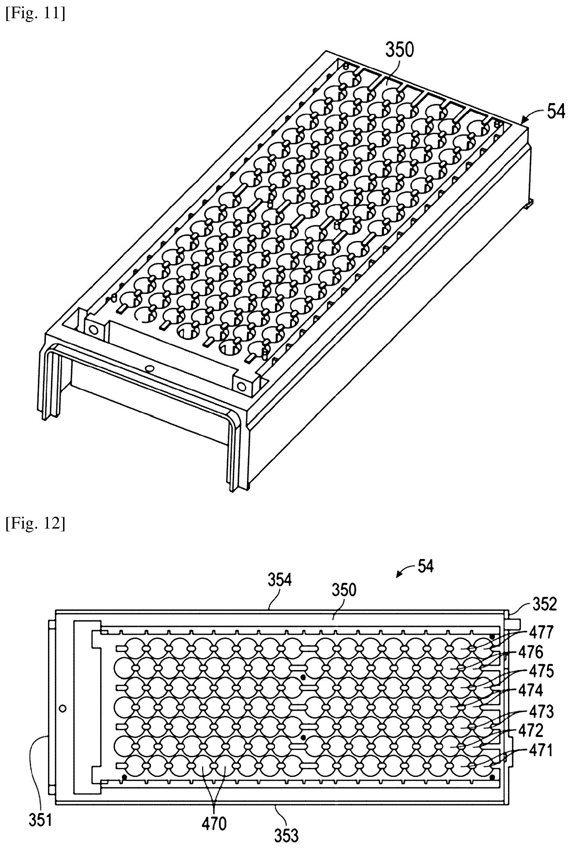

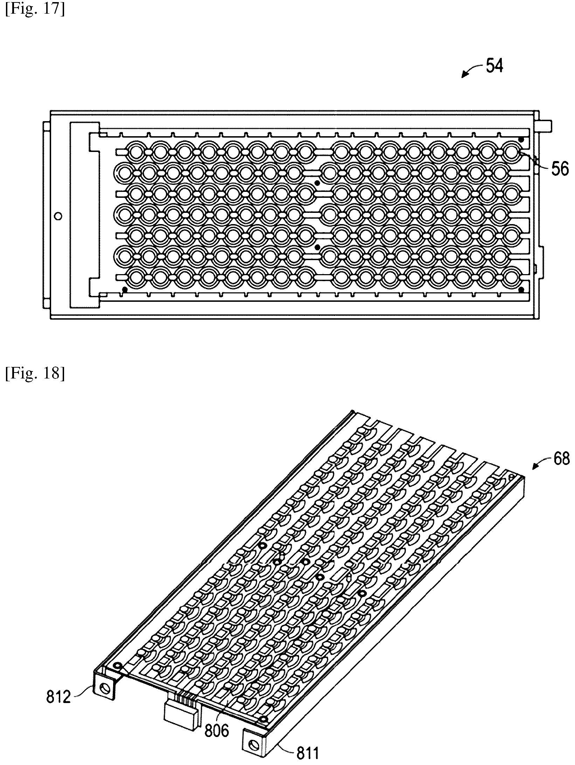

Referring to FIGS. 4, 11, 12 and 17, the first retention housing 54 holds the plurality of cylindrical battery cells 56 therein and on and against the central cooling portion 280 (shown in FIG. 5) such that the battery cells 56 thermally communicate central cooling portion 280. Further, the first retention housing 54 holds the laminated busbar assembly 68 (shown in FIG. 6) thereon. The first retention housing 54 is disposed within the first region 291 (shown in FIG. 5) defined by the central cooling portion 280 and the first and second exterior plates 141, 142. Referring to FIG. 12, the first retention housing 54 has an end wall 350, a first side wall 351, a second side wall 352, a third side wall 353, and a fourth side wall 354. The first and second side walls 351, 352 extend substantially parallel to one another. Further, the third and fourth side walls 353, 354 extend substantially parallel to one another and perpendicular to the first and second side walls 351, 352. In an exemplary embodiment, the end wall 350 and the first, second, third, and fourth side walls 351, 352, 353, 354 are constructed of plastic.

Referring to FIGS. 7 and 12, the end wall 350 is coupled to the first, second, third, and fourth side walls 351, 352, 353, 354 to define an interior region 460 (shown in FIG. 7) and an open end 462. Referring to FIG. 12, the end wall 350 includes a plurality of apertures 470 extending therethrough. Each aperture of the plurality of apertures 470 is associated with a cylindrical battery cell of the plurality of cylindrical battery cells 56. The plurality of apertures 470 includes a first row of apertures 471, a second row of apertures 472, a third row of apertures 473, a fourth row of apertures 474, a fifth row of apertures 475, a sixth row of apertures 476, and a seventh row of apertures 477. Further, each row of apertures in the end wall 350 is aligned with a respective row of cylindrical battery cells in the plurality of cylindrical battery cells 56 such that each aperture in the end wall 350 is aligned and receives a top portion of a cylindrical battery cell therethrough.

The first side wall 351 is coupled to the end wall 350 and the third and fourth side walls 353, 354 and extends in a first direction perpendicular to the end wall 350. Further, the second side wall 352 is coupled to the end wall 350 and the third and fourth side walls 353, 354 and extends in a first direction perpendicular to the end wall 350. Also, the third side wall 353 is coupled to the end wall 350 and the first and second side walls 351, 352 and extends in a first direction perpendicular to the end wall 350. Further, the fourth side wall 354 is coupled to the end wall 350 and the first and second side walls 351, 352 and extends in a first direction perpendicular to the end wall 350.

### First plurality of cylindrical battery cells

Referring to FIGS. 4, 7, 13 and 14, the plurality of cylindrical battery cells 56 are held within the first retention housing 54 and against the battery cell retention frame 50. Referring to FIG. 4, the plurality of cylindrical battery cells 56 includes a first row of battery cells 501, a second row of battery cells 502, a third row of battery cells 503, a fourth row of battery cells 504, a fifth row of battery cells 505, a sixth row of battery cells 506, and a seventh row of battery cells 507.

For purposes of simplicity, only two cylindrical battery cells in each row of cylindrical battery cells in the plurality of cylindrical battery cells 56 will be explained in greater detail below. In particular, the first row of cylindrical battery cells 501 includes cylindrical battery cells 530, 532. The second row of cylindrical battery cells 502 includes cylindrical battery cells 550, 552. The third row of cylindrical battery cells 503 includes cylindrical battery cells 570, 572. The fourth row of cylindrical battery cells 504 includes cylindrical battery cells 590, 592. The fifth row of cylindrical battery cells 505 includes cylindrical battery cells 610, 612. The sixth row of cylindrical battery cells 506 includes cylindrical battery cells 630, 632. The seventh row of cylindrical battery cells 507 includes cylindrical battery cells 650, 652.

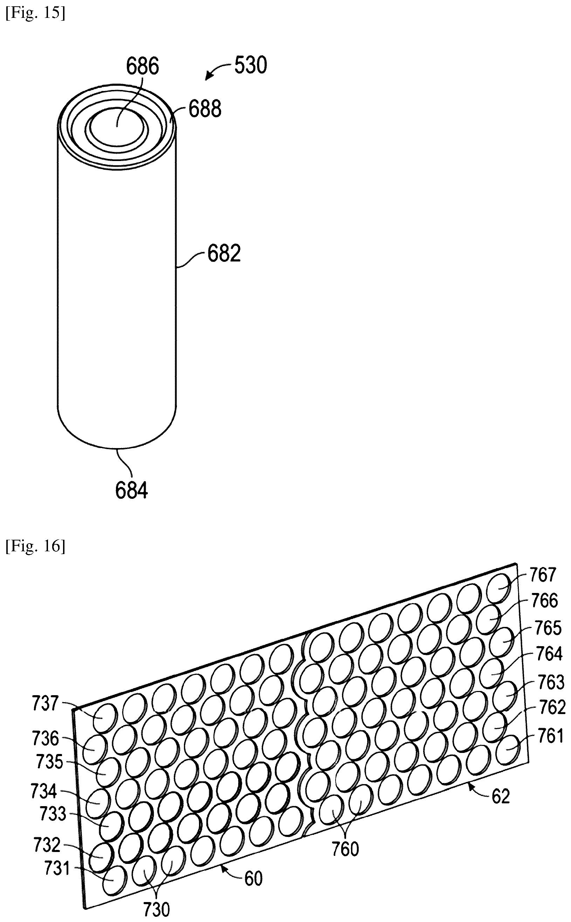

Referring to FIG. 15, since each of the cylindrical battery cells in the plurality of cylindrical battery cells 56 have an identical structure, only the structure of the cylindrical battery cell 530 will be described in greater detail for purposes of simplicity. The cylindrical battery cell 530 includes an outer side surface 682, a bottom surface 684, a positive electrode 686, and a negative electrode 688. The positive electrode 686 is surrounded by the negative electrode 688. Further, the bottom surface 684 contacts the central cooling portion 280 (shown in FIG. 5) of the battery cell retention frame 50 such that heat energy from the cylindrical battery cell 530 is transferred to the central cooling portion 280.

### First and second retaining plates

Referring to FIGS. 7, 12 and 16, the first and second retaining plates 60, 62 are coupled to the first, second, third, fourth side walls 351, 352, 353, 354 (shown in FIG. 12) of the first retention housing 54 to hold the first plurality of cylindrical battery cells 56 within the interior region 460 (shown in FIG. 7) of the first retention housing 54. In an exemplary embodiment, the first and second retaining plates 60, 62 are constructed of plastic.

Referring to FIG. 16, the retaining plate 60 includes a plurality of apertures 730 extending therethrough. The plurality of apertures 730 includes a first row of apertures 731, a second row of apertures 732, a third row of apertures 733, a fourth row of apertures 734, a fifth row of apertures 735, a sixth row of apertures 736, and a seventh row of apertures 737. Each aperture of the first plurality of apertures 730 is sized to allow a bottom surface of a respective cylindrical battery cell to contact the central cooling portion 280 (shown in FIG. 4) while holding the cylindrical battery cell within the interior region 460 (shown in FIG. 7) of the first retention housing 54.

The retaining plate 62 includes a plurality of apertures 760 extending therethrough. The plurality of apertures 760 includes a first row of apertures 761, a second row of apertures 762, a third row of apertures 763, a fourth row of apertures 764, a fifth row of apertures 765, a sixth row of apertures 766, and a seventh row of apertures 767--- which align with the first row of apertures 731, the second row of apertures 732, the third row of apertures 733, the fourth row of apertures 734, the fifth row of apertures 735, the sixth row of apertures 736, and the seventh row of apertures 737, respectively. Each aperture of the plurality of apertures 760 is sized to allow a bottom surface of a respective cylindrical battery cell to contact the central cooling portion 280 (shown in FIG. 4) while holding the cylindrical battery cell within the interior region 460 of the first retention housing 54.

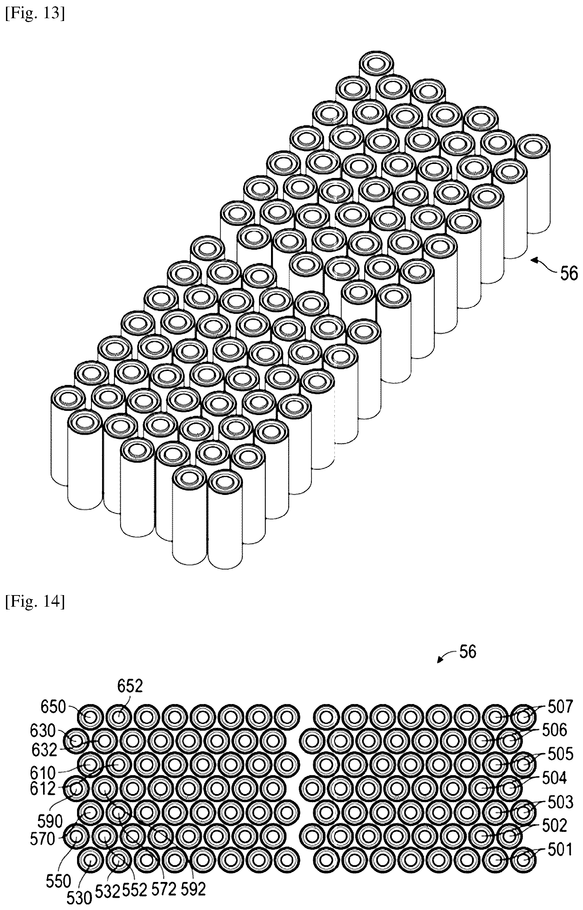

Referring to FIGS. 14 and 16, the first row of apertures 731 of the retaining plate 60, and the first row of apertures 761 of the retaining plate 62 align with the first row of battery cells 501. Further, the second row of apertures 732 of the retaining plate 60, and the second row of apertures 762 of the retaining plate 62 align with the second row of battery cells 502. Further, the third row of apertures 733 of the retaining plate 60, and the third row of apertures 763 of the retaining plate 62 align with the third row of battery cells 503. Further, the fourth row of apertures 734 of the retaining plate 60, and the fourth row of apertures 764 of the retaining plate 62 align with the fourth row of battery cells 504. Further, the fifth row of apertures 735 of the retaining plate 60, and the fifth row of apertures 765 of the retaining plate 62 align with the fifth row of battery cells 505. Further, the sixth row of apertures 736 of the retaining plate 60, and the sixth row of apertures 766 of the retaining plate 62 align with the sixth row of battery cells 506. Further, the seventh row of apertures 737 of the retaining plate 60, and the seventh row of apertures 767 of the retaining plate 62 align with the seventh row of battery cells 507.

### Laminated busbar assembly

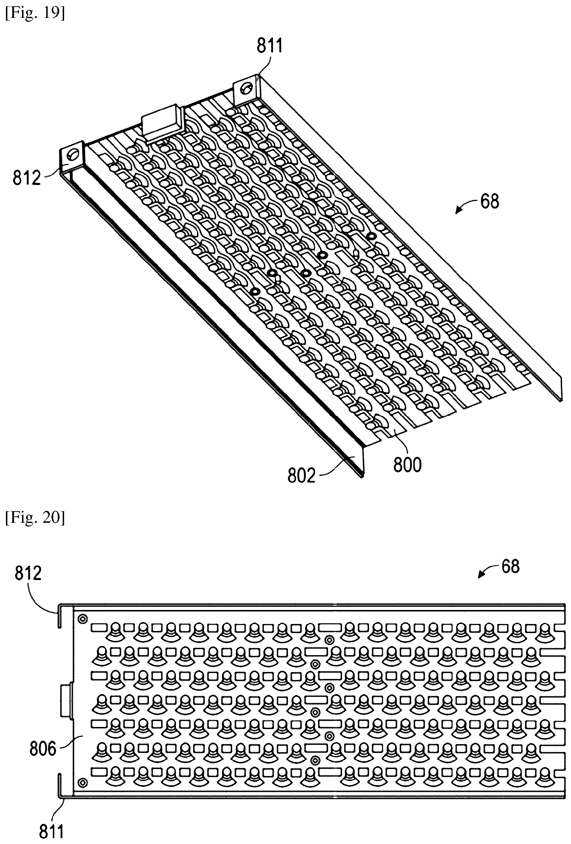

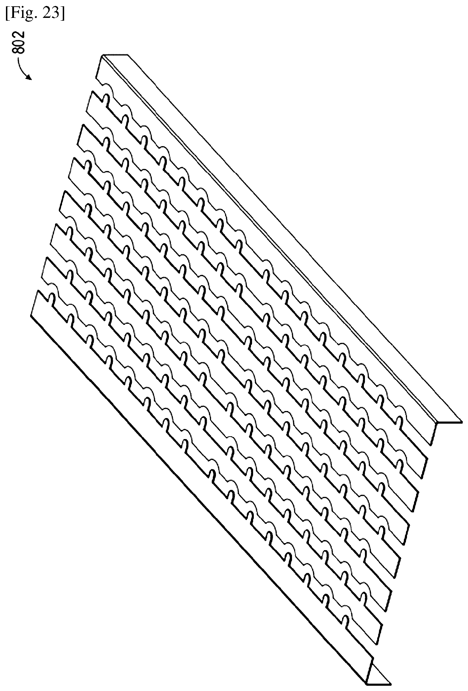

Referring to FIGS. 6, 14 and 18-26, the laminated busbar assembly 68 is provided to electrically couple the first plurality of cylindrical battery cells 56 in a desired electrical configuration. Referring to FIG. 12, the laminated busbar assembly 68 includes a bottom isolation layer 800, a busbar layer 802, a top isolation layer 804, a sensor layer 806, a busbar 811, and a busbar 812. In an exemplary embodiment, the bottom isolation layer 800, the busbar layer 802, the top isolation layer 804, and the sensor layer 806 are coupled together utilizing an adhesive disposed on edges thereof.

The busbar layer 802 is coupled to and between the bottom isolation layer 800 and the top isolation layer 804. In particular, the busbar layer 802 contacts the bottom isolation layer 800 and the top isolation layer 804. Further, top isolation layer 804 is coupled to and between the busbar layer 802 and the sensor layer 806. In particular, the top isolation layer 804 contacts the busbar layer 802 and the sensor layer 806.

### Bottom isolation layer

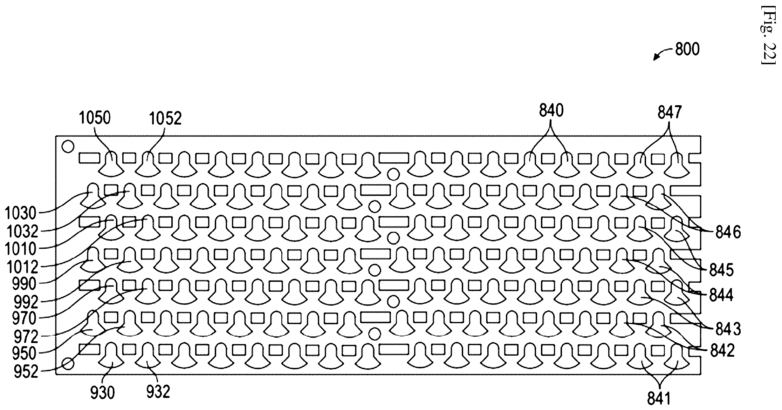

Referring to FIGS. 4, 14, 21 and 22, the bottom isolation layer 800 is disposed against and contacts the first plurality of cylindrical battery cells 56. In an exemplary embodiment, the bottom isolation layer 800 is constructed of an electrically insulative material. Referring to FIG. 22, the bottom isolation layer 800 includes a plurality of apertures 840 extending therethrough. In particular, the plurality of apertures 840 include a first row of apertures 841, a second row of apertures 842, a third row of apertures 843, a fourth row of apertures 844, a fifth row of apertures 845, a sixth row of apertures 846, and a seventh row of apertures 847.

For purposes of simplicity, only two apertures in each row of apertures of the plurality of apertures 840 will be discussed hereinafter. In particular, the first row of apertures 841 includes apertures 930, 932. The second row of apertures 842 includes apertures 950, 952. The third row of apertures 843 includes apertures 970, 972. The fourth row of apertures 844 includes apertures 990, 992. The fifth row of apertures 845 includes apertures 1010, 1012. The sixth row of apertures 846 includes apertures 1030, 1032. The seventh row of apertures 847 includes apertures 1050, 1052.

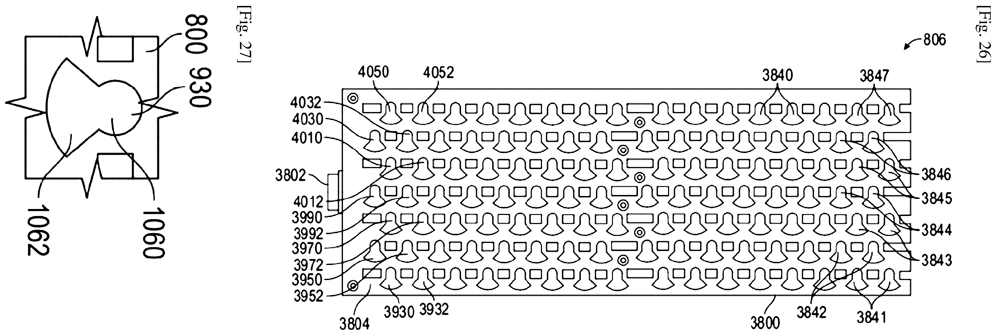

Referring to FIG. 27, since the shape of each of the apertures in the plurality of apertures 840 are identical, only the shape of the aperture 930 will be discussed in greater detail below. In particular, the aperture 930 has a circular aperture portion 1060 and a skirt-shaped aperture portion 1062 communicating with the circular aperture portion 1060. As will be discussed in greater detail below, the circular aperture portion 1060 communicates with a positive electrode of the cylindrical battery cell 530, and the skirt-shaped portion communicates with a portion of a negative electrode of the cylindrical battery cell 530 that is exposed through the skirt-shaped aperture portion 1062.

Referring to FIGS. 14, 15, and 22, for purposes of simplicity, a brief explanation of how some of the plurality of cylindrical battery cells 56 in each row of cylindrical battery cells contact and communicate with the bottom isolation layer 800 will be explained.

The aperture 930 in the bottom isolation layer 800 is sized and shaped to receive a positive electrode of the cylindrical battery cell 530 therethrough, and to expose a portion of the negative electrode of the cylindrical battery cell 530.

The aperture 932 in the bottom isolation layer 800 is sized and shaped to receive a positive electrode of the cylindrical battery cell 532 therethrough, and to expose a portion of the negative electrode of the cylindrical battery cell 532.

The aperture 950 in the bottom isolation layer 800 is sized and shaped to receive a positive electrode of the cylindrical battery cell 550 therethrough, and to expose a portion of the negative electrode of the cylindrical battery cell 550.

The aperture 952 in the bottom isolation layer 800 is sized and shaped to receive a positive electrode of the cylindrical battery cell 552 therethrough, and to expose a portion of the negative electrode of the cylindrical battery cell 552.

The aperture 970 in the bottom isolation layer 800 is sized and shaped to receive a positive electrode of the cylindrical battery cell 570 therethrough, and to expose a portion of the negative electrode of the cylindrical battery cell 570.

The aperture 972 in the bottom isolation layer 800 is sized and shaped to receive a positive electrode of the cylindrical battery cell 572 therethrough, and to expose a portion of the negative electrode of the cylindrical battery cell 572.

The aperture 990 in the bottom isolation layer 800 is sized and shaped to receive a positive electrode of the cylindrical battery cell 590 therethrough, and to expose a portion of the negative electrode of the cylindrical battery cell 590.

The aperture 992 in the bottom isolation layer 800 is sized and shaped to receive a positive electrode of the cylindrical battery cell 592 therethrough, and to expose a portion of the negative electrode of the cylindrical battery cell 592.

The aperture 1010 in the bottom isolation layer 800 is sized and shaped to receive a positive electrode of the cylindrical battery cell 610 therethrough, and to expose a portion of the negative electrode of the cylindrical battery cell 610.

The aperture 1012 in the bottom isolation layer 800 is sized and shaped to receive a positive electrode of the cylindrical battery cell 612 therethrough, and to expose a portion of the negative electrode of the cylindrical battery cell 612.

The aperture 1030 in the bottom isolation layer 800 is sized and shaped to receive a positive electrode of the cylindrical battery cell 630 therethrough, and to expose a portion of the negative electrode of the cylindrical battery cell 630.

The aperture 1032 in the bottom isolation layer 800 is sized and shaped to receive a positive electrode of the cylindrical battery cell 632 therethrough, and to expose a portion of the negative electrode of the cylindrical battery cell 632.

The aperture 1050 in the bottom isolation layer 800 is sized and shaped to receive a positive electrode of the cylindrical battery cell 650 therethrough, and to expose a portion of the negative electrode of the cylindrical battery cell 650.

The aperture 1052 in the bottom isolation layer 800 is sized and shaped to receive a positive electrode of the cylindrical battery cell 652 therethrough, and to expose a portion of the negative electrode of the cylindrical battery cell 652.

### Busbar layer

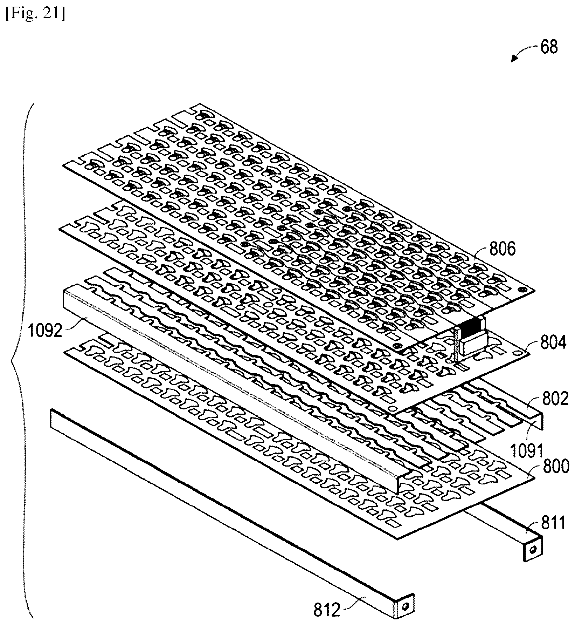

Referring to FIGS. 21, 23, and 24, the busbar layer 802 is disposed against and contacts the bottom layer 800. The busbar layer 802 includes a first layer portion 1081, a second layer portion 1082, a third layer portion 1083, a fourth layer portion 1084, a fifth layer portion 1085, a sixth layer portion 1086, a seventh layer portion 1087, an eighth layer portion 1088, an outer side wall 1091, and an outer side wall 1092. The first, second, third, fourth, fifth, sixth, seventh, eighth layer portions 1081, 1082, 1083, 1084, 1085, 1086, 1087, 1088 are spaced apart from one another and extend substantially parallel to one another. Further, each of the first, second, third, fourth, fifth, sixth, seventh, eighth layer portions 1081, 1082, 1083, 1084, 1085, 1086, 1087, 1088 are constructed of an electrically conductive metal. Referring to FIG. 21, the outer side wall 1091 is coupled to and extends perpendicular to the first layer portion 1081. The outer side wall 1092 is coupled to and extends perpendicular to the eighth layer portion 1088. The outer side walls 1091, 1092 are constructed of an electrically conductive metal.

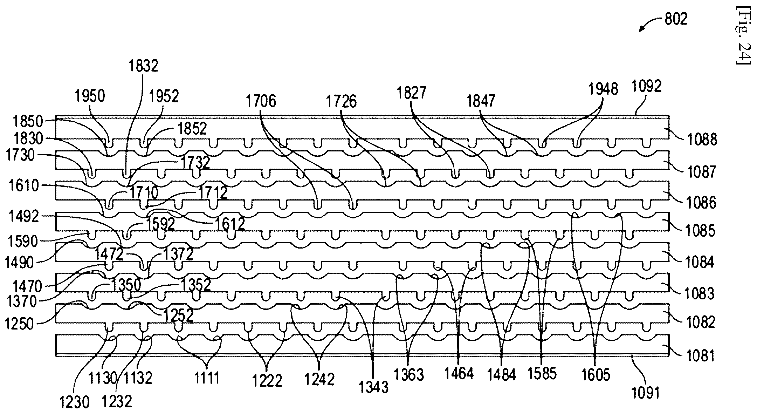

Referring to FIG. 24, the first layer portion 1081 has a plurality of arcuate-shaped slots 1111 that extend from the first edge of the first layer portion 1081 into the first layer portion 1081. Each of the arcuate-shaped slots of the plurality of arcuate-shaped slots 1011 are spaced apart from one another. The plurality of arcuate- shaped slots 1011 includes arcuate-shaped slots 1130, 1132.

The second layer portion 1082 includes a plurality of tabs 1222 and a plurality of arcuate-shaped slots 1242 disposed on opposite edges of the second layer portion 1082. Each of the tabs of the plurality of tabs 1222 are spaced apart from one another. The plurality of tabs 1222 in the second layer portion 1082 includes tabs 1230, 1232 that are aligned with and extend toward the arcuate-shaped slots 1130, 1132, respectively in the first layer portion 1081. Further, each of the arcuate-shaped slots of the plurality of arcuate-shaped slots 1242 are spaced apart from one another. The plurality of arcuate-shaped slots 1242 include arcuate-shaped slots 1250, 1252.

The third layer portion 1083 includes a plurality of tabs 1343 and a plurality of arcuate-shaped slots 1363 disposed on opposite edges of the third layer portion 1083. Each of the tabs of the plurality of tabs 1343 are spaced apart from one another. The plurality of tabs 1343 in the third layer portion 1083 includes tabs 1350, 1352 that are aligned with and extend toward the arcuate-shaped slots 1250, 1252, respectively in the second layer portion 1082. Further, each of the arcuate-shaped slots of the plurality of arcuate-shaped slots 1363 are spaced apart from one another. The plurality of arcuate-shaped slots 1363 include arcuate-shaped slots 1370, 1372.

The fourth layer portion 1084 includes a plurality of tabs 1464 and a plurality of arcuate-shaped slots 1484 disposed on opposite edges of the fourth layer portion 1084. Each of the tabs of the plurality of tabs 1464 are spaced apart from one another. The plurality of tabs 1464 in the fourth layer portion 1084 includes tabs 1470, 1472 that are aligned with and extend toward the arcuate-shaped slots 1370, 1372, respectively in the third layer portion 1083. Further, each of the arcuate-shaped slots of the plurality of arcuate-shaped slots 1484 are spaced apart from one another. The plurality of arcuate-shaped slots 1484 include arcuate-shaped slots 1490, 1492.

The fifth layer portion 1085 includes a plurality of tabs 1585 and a plurality of arcuate-shaped slots 1605 disposed on opposite edges of the fifth layer portion 1085. Each of the tabs of the plurality of tabs 1585 are spaced apart from one another. The plurality of tabs 1585 in the fifth layer portion 1085 includes tabs 1590, 1592 that are aligned with and extend toward the arcuate-shaped slots 1490, 1492, respectively in the fourth layer portion 1084. Further, each of the arcuate-shaped slots of the plurality of arcuate-shaped slots 1605 are spaced apart from one another. The plurality of arcuate-shaped slots 1605 include arcuate-shaped slots 1610, 1612.

The sixth layer portion 1086 includes a plurality of tabs 1706 and a plurality of arcuate-shaped slots 1726 disposed on opposite edges of the sixth layer portion 1086. Each of the tabs of the plurality of tabs 1706 are spaced apart from one another. The plurality of tabs 1706 in the sixth layer portion 1086 includes tabs 1710, 1712 that are aligned with and extend toward the arcuate-shaped slots 1610, 1612, respectively in the fifth layer portion 1085. Further, each of the arcuate-shaped slots of the plurality of arcuate-shaped slots 1726 are spaced apart from one another. The plurality of arcuate-shaped slots 1726 include arcuate-shaped slots 1730, 1732.

The seventh layer portion 1087 includes a plurality of tabs 1827 and a plurality of arcuate-shaped slots 1847 disposed on opposite edges of the seventh layer portion 1087. Each of the tabs of the plurality of tabs 1827 are spaced apart from one another. The plurality of tabs 1827 in the seventh layer portion 1087 includes tabs 1830, 1832 that are aligned with and extend toward the arcuate-shaped slots 1730, 1732, respectively in the sixth layer portion 1086. Further, each of the arcuate-shaped slots of the plurality of arcuate-shaped slots 1847 are spaced apart from one another. The plurality of arcuate-shaped slots 1847 include arcuate-shaped slots 1850, 1852.

The eighth layer portion 1088 includes a plurality of tabs 1948. Each of the tabs of the plurality of tabs 1948 are spaced apart from one another. The plurality of tabs 1948 in the eighth layer portion 1088 includes tabs 1950, 1952 that are aligned with and extend toward the arcuate-shaped slots 1850, 1852, respectively in the seventh layer portion 1087.

Referring to FIGS. 14, 24 and 29, for purposes of simplicity, a brief explanation of how some of the plurality of cylindrical battery cells 56 in each row of cylindrical battery cells contact and communicate with the busbar layer 802 will be explained.

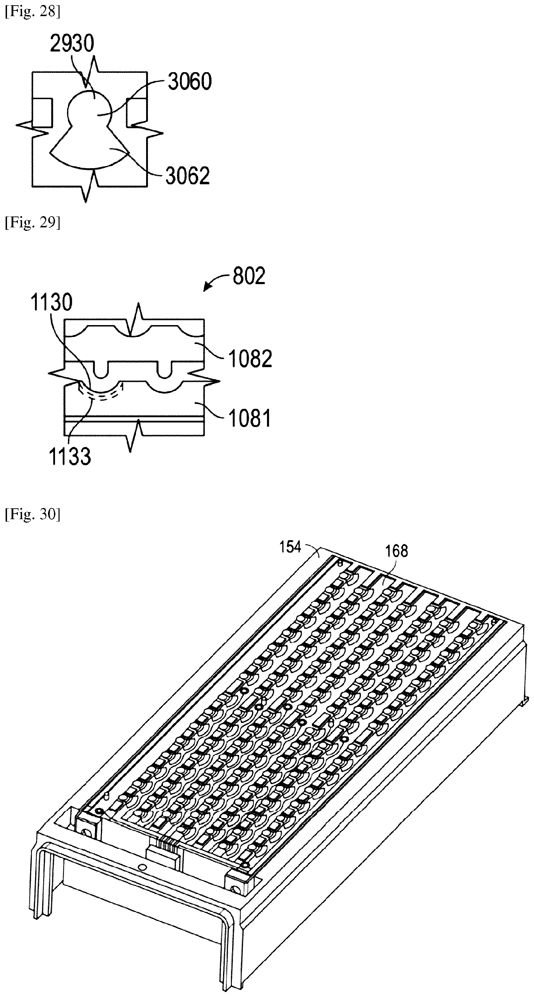

The first layer portion 1081 is disposed against and electrically contacts the negative electrodes of the cylindrical battery cells in the first row of battery cells 501. **In** particular, the negative electrode of the cylindrical battery cell 530 contacts the first layer portion 1081 (in a region 1133 in FIG. 29) proximate to the arcuate-shaped slot 1130. **In** an exemplary embodiment, the region 1133 of the first layer portion 1081 can be depressed towards the negative electrode of the cylindrical battery cell 530 utilizing a welding tool (not shown) to weld/couple the region 1133 to the negative electrode of the cylindrical battery cell 530. Similarly, the negative electrode of the cylindrical battery cell 532 contacts the first layer portion 1081 proximate to the arcuate-shaped slot 1032 and can be welded thereto.

The second layer portion 1082 is disposed against and electrically contacts the positive electrodes of the cylindrical battery cells in the first row of battery cells 501. **In** particular, the positive electrode of the cylindrical battery cell 530 contacts the tab 1230. Further, the positive electrode of the cylindrical battery cell 532 contacts the tab 1232, such that the cylindrical battery cells 530, 532 are electrically coupled in parallel to one another.

Further, the second layer portion 1082 is disposed against and electrically contacts the negative electrodes of the cylindrical battery cells in the second row of battery cells 502. **In** particular, the negative electrode of the cylindrical battery cell 550 contacts the second layer portion 1082 proximate to the arcuate-shaped slot 1250. Further, the negative electrode of the cylindrical battery cell 552 contacts the second layer portion 1082 proximate to the arcuate-shaped slot 1252.

The third layer portion 1083 is disposed against and electrically contacts the positive electrodes of the cylindrical battery cells in the second row of battery cells 502. **In** particular, the positive electrode of the cylindrical battery cell 550 contacts the tab 1350. Further, the positive electrode of the cylindrical battery cell 552 contacts the tab 1352, such that the cylindrical battery cells 550, 552 are electrically coupled in parallel to one another, and are further coupled in series to the parallel combination of the cylindrical battery cells 530, 532.

Further, the third layer portion 1083 is disposed against and electrically contacts the negative electrodes of the cylindrical battery cells in the third row of battery cells 503. **In** particular, the negative electrode of the cylindrical battery cell 570 contacts the third layer portion 1083 proximate to the arcuate-shaped slot 1370. Further, the negative electrode of the cylindrical battery cell 572 contacts the third layer portion 1083 proximate to the arcuate-shaped slot 1372.

The fourth layer portion 1084 is disposed against and electrically contacts the positive electrodes of the cylindrical battery cells in the third row of battery cells 503. **In** particular, the positive electrode of the cylindrical battery cell 570 contacts the tab 1470. Further, the positive electrode of the cylindrical battery cell 572 contacts the tab 1472, such that the cylindrical battery cells 570, 572 are electrically coupled in parallel to one another, and are further coupled in series to the parallel combination of the cylindrical battery cells 550, 552.

Further, the fourth layer portion 1084 is disposed against and electrically contacts the negative electrodes of the cylindrical battery cells in the fourth row of battery cells 504. In particular, the negative electrode of the cylindrical battery cell 590 contacts the fourth layer portion 1084 proximate to the arcuate-shaped slot 1490. Further, the negative electrode of the cylindrical battery cell 592 contacts the fourth layer portion 1084 proximate to the arcuate-shaped slot 1492.

The fifth layer portion 1085 is disposed against and electrically contacts the positive electrodes of the cylindrical battery cells in the fourth row of battery cells 504. In particular, the positive electrode of the cylindrical battery cell 590 contacts the tab 1590. Further, the positive electrode of the cylindrical battery cell 592 contacts the tab 1592, such that the cylindrical battery cells 590, 592 are electrically coupled in parallel to one another, and are further coupled in series to the parallel combination of the cylindrical battery cells 570, 572.

Further, the fifth layer portion 1085 is disposed against and electrically contacts the negative electrodes of the cylindrical battery cells in the fifth row of battery cells 505. In particular, the negative electrode of the cylindrical battery cell 610 contacts the fifth layer portion 1085 proximate to the arcuate-shaped slot 1610. Further, the negative electrode of the cylindrical battery cell 612 contacts the fifth layer portion 1085 proximate to the arcuate-shaped slot 1612.

The sixth layer portion 1086 is disposed against and electrically contacts the positive electrodes of the cylindrical battery cells in the fifth row of battery cells 505. In particular, the positive electrode of the cylindrical battery cell 610 contacts the tab 1710. Further, the positive electrode of the cylindrical battery cell 612 contacts the tab 1712, such that the cylindrical battery cells 610, 612 are electrically coupled in parallel to one another, and are further coupled in series to the parallel combination of the cylindrical battery cells 590, 592.

Further, the sixth layer portion 1086 is disposed against and electrically contacts the negative electrodes of the cylindrical battery cells in the sixth row of battery cells 506. In particular, the negative electrode of the cylindrical battery cell 610 contacts the sixth layer portion 1086 proximate to the arcuate-shaped slot 1730. Further, the negative electrode of the cylindrical battery cell 612 contacts the sixth layer portion 1086 proximate to the arcuate-shaped slot 1732.

The seventh layer portion 1087 is disposed against and electrically contacts the positive electrodes of the cylindrical battery cells in the sixth row of battery cells 506. In particular, the positive electrode of the cylindrical battery cell 630 contacts the tab 1830. Further, the positive electrode of the cylindrical battery cell 632 contacts the tab 1832, such that the cylindrical battery cells 630, 632 are electrically coupled in parallel to one another, and are further coupled in series to the parallel combination of the cylindrical battery cells 610, 612.

Further, the seventh layer portion 1087 is disposed against and electrically contacts the negative electrodes of the cylindrical battery cells in the seventh row of battery cells 507. In particular, the negative electrode of the cylindrical battery cell 650 contacts the seventh layer portion 1087 proximate to the arcuate-shaped slot 1850. Further, the negative electrode of the cylindrical battery cell 652 contacts the seventh layer portion 1087 proximate to the arcuate-shaped slot 1852.

The eighth layer portion 1088 is disposed against and electrically contacts the positive electrodes of the cylindrical battery cells in the seventh row of battery cells 507. In particular, the positive electrode of the cylindrical battery cell 650 contacts the tab 1950. Further, the positive electrode of the cylindrical battery cell 652 contacts the tab 1952, such that the cylindrical battery cells 650, 652 are electrically coupled in parallel to one another, and are further coupled in series to the parallel combination of the cylindrical battery cells 630, 632.

Referring to FIGS. 21 and 24, the first and second busbars 811, 812 are coupled to the outer side walls 1091, 1092, respectively, of the busbar layer 802.

### Top isolation layer

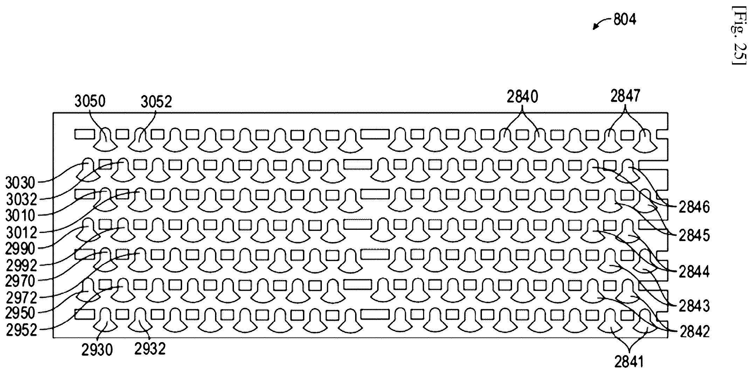

Referring to FIGS. 21 and 25, the top isolation layer 804 is disposed against and contacts the busbar layer 802. In an exemplary embodiment, the top isolation layer 804 is constructed of an electrically insulative material. The top isolation layer 804 includes a plurality of apertures 2840 extending therethrough. In particular, the plurality of apertures 2840 include a first row of apertures 2841, a second row of apertures 2842, a third row of apertures 2843, a fourth row of apertures 2844, a fifth row of apertures 2845, a sixth row of apertures 2846, and a seventh row of apertures 2847.

For purposes of simplicity, only two apertures in each row of apertures of the plurality of apertures 2840 will be discussed hereinafter. In particular, the first row of apertures 2841 includes apertures 2930, 2932. The second row of apertures 2842 includes apertures 2950, 2952. The third row of apertures 2843 includes apertures 2970, 2972. The fourth row of apertures 2844 includes apertures 2990, 2992. The fifth row of apertures 2845 includes apertures 3010, 3012. The sixth row of apertures 2846 includes apertures 3030, 3032. The seventh row of apertures 2847 includes apertures 3050, 3052.

Referring to FIGS. 25 and 28, since the shape of each of the apertures in the plurality of apertures 2840 are identical, only the shape of the aperture 2930 will be discussed in greater detail below. In particular, the aperture 2930 has a circular aperture portion 3060 and a skirt-shaped aperture portion 3062 communicating with the circular aperture portion 3060.

Referring to FIGS. 14, 24, and 25, for purposes of understanding, a brief explanation of how the apertures in the top isolation layer 804 align and expose the tabs in the busbar layer 802 contacting the positive electrodes of the plurality of cylindrical battery cells 56, and further align and expose a portion of the busbar layer 802 contacting the negative electrodes of the plurality of cylindrical battery cells 56 will be provided.

The aperture 2930 is sized and shaped to expose a tab 1230 of the busbar layer 802 contacting the positive electrode of the cylindrical battery cell 530, and to expose a portion of the busbar layer 802 contacting the negative electrode of the cylindrical battery cell 530. In particular, the circular portion 3060 (shown in FIG. 28) exposes the tab 1230 of the busbar layer 802 contacting the positive electrode of the cylindrical battery cell 530, and the skirt-shaped portion 3062 (shown in FIG. 28) exposes a portion of the busbar layer 802 contacting the negative electrode of the cylindrical battery cell 530.

The aperture 2932 is sized and shaped to expose a tab 1232 of the busbar layer 802 contacting the positive electrode of the cylindrical battery cell 532, and to expose a portion of the busbar layer 802 contacting the negative electrode of the cylindrical battery cell 532.

The aperture 2950 is sized and shaped to expose a tab 1350 of the busbar layer 802 contacting the positive electrode of the cylindrical battery cell 550, and to expose a portion of the busbar layer 802 contacting the negative electrode of the cylindrical battery cell 550.

The aperture 2952 is sized and shaped to expose a tab 1352 of the busbar layer 802 contacting the positive electrode of the cylindrical battery cell 552, and to expose a portion of the busbar layer 802 contacting the negative electrode of the cylindrical battery cell 552.

The aperture 2970 is sized and shaped to expose a tab 1470 of the busbar layer 802 contacting the positive electrode of the cylindrical battery cell 570, and to expose a portion of the busbar layer 802 contacting the negative electrode of the cylindrical battery cell 570.

The aperture 2972 is sized and shaped to expose a tab 1472 of the busbar layer 802 contacting the positive electrode of the cylindrical battery cell 572, and to expose a portion of the busbar layer 802 contacting the negative electrode of the cylindrical battery cell 572.

The aperture 2990 is sized and shaped to expose a tab 1490 of the busbar layer 802 contacting the positive electrode of the cylindrical battery cell 590, and to expose a portion of the busbar layer 802 contacting the negative electrode of the cylindrical battery cell 590.

The aperture 2992 is sized and shaped to expose a tab 1492 of the busbar layer 802 contacting the positive electrode of the cylindrical battery cell 592, and to expose a portion of the busbar layer 802 contacting the negative electrode of the cylindrical battery cell 592.

The aperture 3010 is sized and shaped to expose a tab 1710 of the busbar layer 802 contacting the positive electrode of the cylindrical battery cell 610, and to expose a portion of the busbar layer 802 contacting the negative electrode of the cylindrical battery cell 610.

The aperture 3012 is sized and shaped to expose a tab 1712 of the busbar layer 802 contacting the positive electrode of the cylindrical battery cell 612, and to expose a portion of the busbar layer 802 contacting the negative electrode of the cylindrical battery cell 612.

The aperture 3030 is sized and shaped to expose a tab 1830 of the busbar layer 802 contacting the positive electrode of the cylindrical battery cell 630, and to expose a portion of the busbar layer 802 contacting the negative electrode of the cylindrical battery cell 630.

The aperture 3032 is sized and shaped to expose a tab 1832 of the busbar layer 802 contacting the positive electrode of the cylindrical battery cell 632, and to expose a portion of the busbar layer 802 contacting the negative electrode of the cylindrical battery cell 632.

The aperture 3050 is sized and shaped to expose a tab 1950 of the busbar layer 802 contacting the positive electrode of the cylindrical battery cell 650, and to expose a portion of the busbar layer 802 contacting the negative electrode of the cylindrical battery cell 650.

The aperture 3052 is sized and shaped to expose a tab 1952 of the busbar layer 802 contacting the positive electrode of the cylindrical battery cell 652, and to expose a portion of the busbar layer 802 contacting the negative electrode of the cylindrical battery cell 652.

### Sensor layer

Referring to FIGS. 21 and 26, the sensor layer 806 is disposed against and contacts the top isolation layer 804. In an exemplary embodiment, the sensor layer 806 includes an electrically insulative substrate 3800, an electrical connector 3802, and an electrical trace 3804. The electrical connector 3802 is coupled to the electrically insulative substrate 3800. The electrical trace 3804 is electrically coupled to and between the electrical connector 3802 and at least one positive electrode of a cylindrical battery cell of the plurality of cylindrical battery cells 56.

The sensor layer 806 includes a plurality of apertures 3840 extending through the substrate 3800. In particular, the plurality of apertures 3840 include a first row of apertures 3841, a second row of apertures 3842, a third row of apertures 3843, a fourth row of apertures 3844, a fifth row of apertures 3845, a sixth row of apertures 3846, and a seventh row of apertures 3847.

For purposes of simplicity, only two apertures in each row of apertures of the plurality of apertures 3840 will be discussed hereinafter. In particular, the first row of apertures 3841 includes apertures 3930, 3932. The second row of apertures 3842 includes apertures 3950, 3952. The third row of apertures 3843 includes apertures 3970, 3972. The fourth row of apertures 3844 includes apertures 3990, 3992. The fifth row of apertures 3845 includes apertures 4010, 4012. The sixth row of apertures 3846 includes apertures 4030, 4032. The seventh row of apertures 3847 includes apertures 4050, 4052.

Referring to FIGS. 14, 24, and 26, for purposes of understanding, a brief explanation of how the apertures in the sensor layer 806 align and expose the tabs in the busbar layer 802 contacting the positive electrodes of the plurality of cylindrical battery cells 56, and further align and expose a portion of the busbar layer 802 contacting the negative electrodes of the plurality of cylindrical battery cells 56 will be provided.

The aperture 3930 is sized and shaped to expose a tab 1230 of the busbar layer 802 contacting the positive electrode of the cylindrical battery cell 530, and to expose a portion of the busbar layer 802 contacting the negative electrode of the cylindrical battery cell 530.

The aperture 3932 is sized and shaped to expose a tab 1232 of the busbar layer 802 contacting the positive electrode of the cylindrical battery cell 532, and to expose a portion of the busbar layer 802 contacting the negative electrode of the cylindrical battery cell 532.

The aperture 3950 is sized and shaped to expose a tab 1350 of the busbar layer 802 contacting the positive electrode of the cylindrical battery cell 550, and to expose a portion of the busbar layer 802 contacting the negative electrode of the cylindrical battery cell 550.

The aperture 3952 is sized and shaped to expose a tab 1352 of the busbar layer 802 contacting the positive electrode of the cylindrical battery cell 552, and to expose a portion of the busbar layer 802 contacting the negative electrode of the cylindrical battery cell 552.

The aperture 3970 is sized and shaped to expose a tab 1470 of the busbar layer 802 contacting the positive electrode of the cylindrical battery cell 570, and to expose a portion of the busbar layer 802 contacting the negative electrode of the cylindrical battery cell 570.

The aperture 3972 is sized and shaped to expose a tab 1472 of the busbar layer 802 contacting the positive electrode of the cylindrical battery cell 572, and to expose a portion of the busbar layer 802 contacting the negative electrode of the cylindrical battery cell 572.

The aperture 3990 is sized and shaped to expose a tab 1490 of the busbar layer 802 contacting the positive electrode of the cylindrical battery cell 590, and to expose a portion of the busbar layer 802 contacting the negative electrode of the cylindrical battery cell 590.

The aperture 3992 is sized and shaped to expose a tab 1492 of the busbar layer 802 contacting the positive electrode of the cylindrical battery cell 592, and to expose a portion of the busbar layer 802 contacting the negative electrode of the cylindrical battery cell 592.

The aperture 4010 is sized and shaped to expose a tab 1710 of the busbar layer 802 contacting the positive electrode of the cylindrical battery cell 610, and to expose a portion of the busbar layer 802 contacting the negative electrode of the cylindrical battery cell 610.

The aperture 4012 is sized and shaped to expose a tab 1712 of the busbar layer 802 contacting the positive electrode of the cylindrical battery cell 612, and to expose a portion of the busbar layer 802 contacting the negative electrode of the cylindrical battery cell 612.

The aperture 4030 is sized and shaped to expose a tab 1830 of the busbar layer 802 contacting the positive electrode of the cylindrical battery cell 630, and to expose a portion of the busbar layer 802 contacting the negative electrode of the cylindrical battery cell 630.

The aperture 4032 is sized and shaped to expose a tab 1832 of the busbar layer 802 contacting the positive electrode of the cylindrical battery cell 632, and to expose a portion of the busbar layer 802 contacting the negative electrode of the cylindrical battery cell 632.

The aperture 4050 is sized and shaped to expose a tab 1950 of the busbar layer 802 contacting the positive electrode of the cylindrical battery cell 650, and to expose a portion of the busbar layer 802 contacting the negative electrode of the cylindrical battery cell 650.

The aperture 4052 is sized and shaped to expose a tab 1952 of the busbar layer 802 contacting the positive electrode of the cylindrical battery cell 652, and to expose a portion of the busbar layer 802 contacting the negative electrode of the cylindrical battery cell 652.

In the laminated busbar assembly 68, a tab of the busbar layer 802 is exposed (e.g., viewable from above the assembly 68) such that a welding tool (not shown) can contact and weld the tab to a respective positive electrode of the cylindrical battery cell. Further, it is noted that a portion of the busbar layer 802 contacting a negative electrode of the cylindrical battery cell is exposed such that respective portion of the busbar layer 802 can be welded to the negative electrode of the cylindrical battery cell.

### Second retention housing

Referring to FIGS. 4, 30, and 31, the second retention housing 154 holds the plurality of cylindrical battery cells 156 therein and on and against the central cooling portion 280 (shown in FIG. 4) such that the battery cells 156 thermally communicate central cooling portion 280. Further, the second retention housing 154 holds the laminated busbar assembly 168 thereon. Still further, the second retention housing 154 supports the retaining plates 160, 162 thereon. The second retention housing 154 is disposed within the second region 292 (shown in FIG. 4) defined by the central cooling portion 280 and the first and second exterior plates 141, 142. The structure of the second retention housing 154 is identical to the structure of the first retention housing 54. Further, the structure of the retaining plates 160, 162 are identical to the structure of retaining plates 60, 62, respectively. Further, the structure of the plurality of cylindrical battery cells 156 is identical to the structure of the plurality of cylindrical battery cells 56. Further, the structure of the laminated busbar assembly 168 is identical to the structure of the laminated busbar assembly 68.

### First outer plate

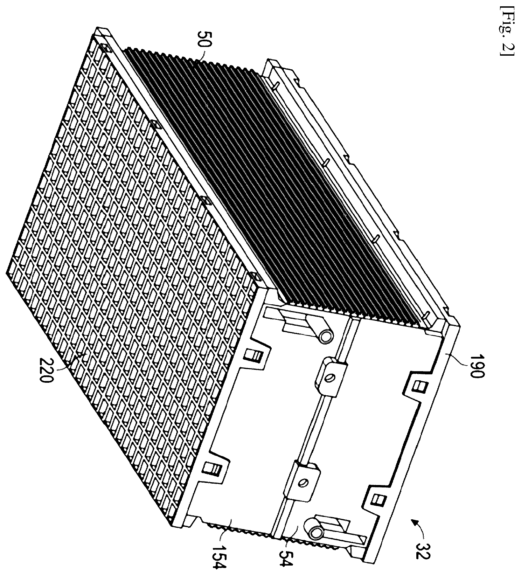

Referring to FIGS. 2-4, the first outer plate 190 is coupled to the first retention housing 54 and the battery cell retention frame 50 utilizing the bolts 191, 192, 193, 194, 195, 196, 197, 198, 199. In an exemplary embodiment, the first outer plate 190 is constructed of plastic.

### Second outer plate

The second outer plate 220 is coupled to the second retention housing 154 and the battery cell retention frame 50 utilizing the bolts 221, 222, 223, 224, 225, 226, 227, 228, 229. In an exemplary embodiment, the second outer plate 220 is constructed of plastic.

### Circuit board

Referring to FIGS. 3 and 26, the circuit board 240 includes a battery management controller 5000 that is electrically coupled to the electrical connector 3802 of the sensor layer 806 in the laminated busbar assembly 68 to monitor the operation of the plurality of cylindrical battery cells 56. Further, the battery management controller 500 is electrically coupled to an electrical connector in a sensor layer in the laminated busbar assembly 168 to monitor the operation of the plurality of cylindrical battery cells 156. The circuit board 240 is coupled to an end of the first retention housing 54 and the second retention housing 154.

### Electrical bus bar

The electrical busbar 242 is provided to electrically couple together the laminated busbar assemblies 68, 168. In particular, the electrical busbar 242 is electrically coupled to the laminated busbar assembly 68 (which is electrically coupled to the plurality of cylindrical battery cells 56) and to the laminated busbar assembly 168 (which is electrically coupled to the plurality of cylindrical battery cells 156).

### Cover plate

The cover plate 246 is attached to the first and second outer plates 190, 220 to cover the circuit board 240. In an exemplary embodiment, the cover plate 246 is constructed of plastic.

The battery module 32 provides a substantial advantage over other battery modules. In particular, the battery module 32 utilizes a laminated busbar assembly 68 that has a technical effect of electrically connecting cylindrical battery cells in a desired electrical configuration while having a relatively low height profile.

While the claimed invention has been described in detail in connection with only a limited number of embodiments, it should be readily understood that the invention is not limited to such disclosed embodiments. Rather, the claimed invention can be modified to incorporate any number of variations, alterations, substitutions or equivalent arrangements not heretofore described, but which are commensurate with the scope of the invention. Additionally, while various embodiments of the claimed invention have been described, it is to be understood that aspects of the invention may include only some of the described embodiments.

## Claims

1. A battery module (32), comprising:
a first cylindrical battery cell (56, 156, 530) having a positive electrode (686) and a negative electrode (688);
a second cylindrical battery cell (56, 156, 532) having a positive electrode (686) and a negative electrode (688);
a laminated busbar assembly (68, 168) having a bottom isolation layer (800), a busbar layer (802), a top isolation layer (804);
the busbar layer (802) being coupled to and between the bottom isolation layer (800) and the top isolation layer (804); the bottom isolation layer (800) contacting the first and second cylindrical battery cells (56, 156, 532),
the bottom isolation layer (800) having a first aperture (930) and a second aperture (932) extending therethrough,
the first aperture (930) of the bottom isolation layer (800) being sized and shaped to receive the positive electrode (686) of the first cylindrical battery cell (56, 156, 530) therethrough and to expose a portion of the negative electrode (688) of the first cylindrical battery cell (56, 156, 530);
the second aperture (932) of the bottom isolation layer (800) being sized and shaped to receive the positive electrode (686) of the second cylindrical battery cell (56, 156, 532) therethrough and to expose a portion of the negative electrode (688) of the second cylindrical battery cell (56, 156, 532);
the top isolation layer (804) having a first aperture (2930) and a second aperture (2932) extending therethrough; and
the busbar layer (802) having a first layer portion (1081) and a second layer portion (1082),
the second layer portion (1082) being spaced apart from the first layer portion (1081);
the first layer portion (1081) being disposed against and electrically contacting the negative electrode (688) of the first cylindrical battery cell (56, 156, 530) and the negative electrode (688) of the second cylindrical battery cell (56, 156, 532);
the second layer portion (1082) being disposed against and electrically contacting the positive electrode (686) of the first cylindrical battery cell (56, 156, 530) and the positive electrode (686) of the second cylindrical battery cell (56, 156, 532) such that the first and second cylindrical battery cells (56, 156, 530, 532) are electrically coupled in parallel to one another; wherein
the first and second apertures (2930, 2932) of the top isolation layer (804) being sized and shaped to match the first and second apertures (930, 932) of the bottom isolation layer (800).

2. The battery module (32) of claim 1, wherein:
the first layer portion (1081) having first and second arcuate-shaped slots (1130, 1132) that extend from a first edge thereof into the first layer portion (1081),
the first and second arcuate-shaped slots (1130, 1132) being spaced apart from one another; and
the second layer portion (1082) having first and second tabs (1230, 1232) extending toward the first and second arcuate-shaped slots (1130, 1132), respectively.

3. The battery module (32) of claim 2, wherein:
the first and second tabs (1230, 1232) contacting the positive electrode (686) of the first cylindrical battery cell (56, 156, 530) and the positive electrode (686) of the second cylindrical battery cell (56, 156, 532), respectively.

4. The battery module (32) of claim 3, wherein:
the negative electrode (688) of the first cylindrical battery cell (56, 156, 530) and the negative electrode (688) of the second cylindrical battery cell (56, 156, 532) contacting the first layer portion (1081) proximate to the first and second arcuate-shaped slots (1130, 1132), respectively.

5. The battery module (32) of claim 3, wherein:
the busbar layer (802) further having first and second outer side walls (1091, 1092) that extend perpendicular to the first and second layer portions (1081, 1082),
the first and second layer portions (1081, 1082) being disposed between the first and second outer side walls (1091, 1092); and
first and second busbars (811, 812) being coupled to the first and second outer side walls (1091, 1092), respectively, of the busbar layer (802).

6. The battery module (32) of claim 1, wherein:
the first aperture (930) in the bottom isolation layer (800) having a circular aperture portion (1060, 3060) and a skirt-shaped aperture portion (1062, 3062) communicating with the circular aperture portion (1060, 3060),
the circular aperture portion (1060, 3060) communicating with the positive electrode (686) of the first cylindrical battery cell (56, 156, 530), and
the skirt-shaped aperture portion (1062, 3062) communicating with a portion of the negative electrode (688) of the first cylindrical battery cell (56, 156, 530).

7. The battery module (32) of claim 1, wherein:
the first aperture (2930) of the top isolation layer (804) being sized and shaped to expose a tab (1230, 1232) of the busbar layer (802) contacting the positive electrode (686) of the first cylindrical battery cell (56, 156, 530), and to expose a portion of the busbar layer (802) contacting the negative electrode (688) of the first cylindrical battery cell (56, 156, 530).

8. The battery module (32) of claim 7, wherein:
the first aperture (2930) in the top isolation layer (804) having a circular aperture portion (1060, 3060) and a skirt-shaped aperture portion (1062, 3062) communicating with the circular aperture portion (1060, 3060),
the circular aperture portion (1060, 3060) exposing the tab (1230, 1232) of the busbar layer (802) contacting the positive electrode (686) of the first cylindrical battery cell (56, 156, 530), and
the skirt-shaped aperture portion (1062, 3062) exposing the portion of the busbar layer (802) contacting the negative electrode (688) of the first cylindrical battery cell (56, 156, 530).

9. The battery module (32) of claim 8, further comprising:
a sensor layer (806) being coupled to the top isolation layer (804), the sensor layer (806) having an electrical trace (3804) that is electrically coupled to the positive electrode (686) of the first cylindrical battery cell (56, 156, 530).

10. A battery module (32), comprising:
a first cylindrical battery cell (56, 156, 530, 532) having a positive electrode (686) and a negative electrode (688);
a second cylindrical battery cell (56, 156, 550, 552) having a positive electrode (686) and a negative electrode (688);
a laminated busbar assembly (68, 168) having a bottom isolation layer (800), a busbar layer (802), a top isolation layer (804);
the busbar layer (802) being coupled to and between the bottom isolation layer (800) and the top isolation layer (804);
the bottom isolation layer (800) contacting the first and second cylindrical battery cells (56, 156, 532),
the bottom isolation layer (800) having a first aperture (930) and a second aperture (932) extending therethrough,
the first aperture (930) being sized and shaped to receive the positive electrode (686) of the first cylindrical battery cell (56, 156, 530) therethrough and to expose a portion of the negative electrode (688) of the first cylindrical battery cell (56, 156, 530);
the second aperture (932) being sized and shaped to receive the positive electrode (686) of the second cylindrical battery cell (56, 156, 532) therethrough and to expose a portion of the negative electrode (688) of the second cylindrical battery cell (56, 156, 532);
the top isolation layer (804) having a first aperture (2930) and a second aperture (2932) extending therethrough; and
the busbar layer (802) having first, second, and third layer portions (1081, 1082, 1083) that are spaced apart from one another;
the first layer portion (1081) being disposed against and electrically contacting the negative electrode (688) of the first cylindrical battery cell (56, 156, 530, 532);
the second layer portion (1082) being disposed against and electrically contacting the positive electrode (686) of the first cylindrical battery cell (56, 156, 530, 532) and the negative electrode (688) of the second cylindrical battery cell (56, 156, 550, 552);
the third layer portion (1083) being disposed against and electrically contacting the positive electrode (686) of the second cylindrical battery cell (56, 156, 550, 552) such that the first and second cylindrical battery cells (56, 156, 530, 532, 550, 552) are electrically coupled in series to one another; wherein
the first and second apertures (2930, 2932) of the top isolation layer (804) being sized and shaped to match the first and second apertures (930, 932) of the bottom isolation layer (800).

11. The battery module (32) of claim 10, wherein:
the first layer portion (1081) having an arcuate-shaped slot (1130, 1132) that extends from an edge thereof into the first layer portion (1081); and
the second layer portion (1082) having a tab (1230, 1232) and an arcuate-shaped slot (1130, 1132),
the tab (1230, 1232) of the second layer portion (1082) extending toward the arcuate-shaped slot (1130, 1132) of the first layer portion (1081),
the arcuate-shaped slot (1130, 1132) of the second layer portion (1082) extending from an edge thereof into the second layer portion (1082); and
the third layer portion (1083) having a tab (1230, 1232) that extends toward the arcuate-shaped slot (1130, 1132) of the second layer portion (1082).

12. The battery module (32) of claim 11, wherein:
the negative electrode (688) of the first cylindrical battery cell (56, 156, 530) contacting the first layer portion (1081) proximate to the arcuate-shaped slot (1130, 1132) of the first layer portion (1081);
the tab (1230, 1232) of the second layer portion (1082) contacting the positive electrode (686) of the first cylindrical battery cell (56, 156, 530);
the negative electrode (688) of the second cylindrical battery cell (56, 156, 532) contacting the second layer portion (1082) proximate to the arcuate-shaped slot (1130, 1132) of the second layer portion (1082); and
the tab (1230, 1232) of the third layer portion (1083) contacting the positive electrode (686) of the second cylindrical battery cell (56, 156, 532).

13. The battery module (32) of claim 10, wherein:
the busbar layer (802) further having first and second outer side walls (1091, 1092) that extend perpendicular to the first and second layer portions (1081, 1082),
the first and second layer portions (1081, 1082) being disposed between the first and second outer side walls (1091, 1092); and
first and second busbars (811, 812) being coupled to the first and second outer side walls (1091, 1092), respectively, of the busbar layer (802).

14. The battery module (32) of claim 10, wherein:
the first aperture (930) in the bottom isolation layer (800) having a circular aperture portion (1060, 3060) and a skirt-shaped aperture portion (1062, 3062) communicating with the circular aperture portion (1060, 3060),
the circular aperture portion (1060, 3060) communicating with the positive electrode (686) of the first cylindrical battery cell (56, 156, 530, 532), and
the skirt-shaped aperture portion (1062, 3062) communicating with a portion of the negative electrode (688) of the first cylindrical battery cell (56, 156, 530, 532).

15. The battery module (32) of claim 10, wherein:
the first aperture (2930) of the top isolation layer (804) being sized and shaped to expose a tab (1230, 1232) of the busbar layer (802) contacting the positive electrode (686) of the first cylindrical battery cell (56, 156, 530), and to expose a portion of the busbar layer (802) contacting the negative electrode (688) of the first cylindrical battery cell (56, 156, 530).

16. The battery module (32) of claim 15, wherein:
the first aperture (930) in the top isolation layer (804) having a circular aperture portion (1060, 3060) and a skirt-shaped aperture portion (1062, 3062) communicating with the circular aperture portion (1060, 3060),
the circular aperture portion (1060, 3060) exposing the tab (1230, 1232) of the busbar layer (802) contacting the positive electrode (686) of the first cylindrical battery cell (56, 156, 530), and
the skirt-shaped aperture portion (1062, 3062) exposing the portion of the busbar layer (802) contacting the negative electrode (688) of the first cylindrical battery cell (56, 156, 530).

17. The battery module (32) of claim 15, further comprising:
a sensor layer (806) being coupled to the top isolation layer (804), the sensor layer (806) having an electrical trace (3804) that is electrically coupled to the positive electrode (686) of the first cylindrical battery cell (56, 156, 530).

## Patentansprüche

1. Batteriemodul (32) aufweisend:
eine erste zylindrische Batteriezelle (56, 156, 530) aufweisend eine positive Elektrode (686) und eine negative Elektrode (688);
eine zweite zylindrische Batteriezelle (56, 156, 532) aufweisend eine positive Elektrode (686) und eine negative Elektrode (688);
eine laminierte Sammelschienenanordnung (68, 168) aufweisend eine untere Isolationsschicht (800), eine Sammelschienenschicht (802), eine obere Isolationsschicht (804);
wobei die Sammelschienenschicht (802) mit und zwischen der unteren Isolationsschicht (800) und der oberen Isolationsschicht (804) gekoppelt ist; wobei die untere Isolationsschicht (800) die erste und die zweite zylindrische Batteriezelle (56, 156, 532) kontaktiert,
wobei die untere Isolationsschicht (800) eine erste Öffnung (930) und eine zweite Öffnung (932) aufweist, die sich dadurch erstrecken,
wobei die erste Öffnung (930) der unteren Isolationsschicht (800) so bemessen und geformt ist, dass sie die positive Elektrode (686) der ersten zylindrischen Batteriezelle (56, 156, 530) dadurch aufnimmt und einen Abschnitt der negativen Elektrode (688) der ersten zylindrischen Batteriezelle (56, 156, 530) freilegt;
wobei die zweite Öffnung (932) der unteren Isolationsschicht (800) so bemessen und geformt ist, dass sie die positive Elektrode (686) der zweiten zylindrischen Batteriezelle (56, 156, 532) dadurch aufnimmt und einen Abschnitt der negativen Elektrode (688) der zweiten zylindrischen Batteriezelle (56, 156, 532) freilegt;
wobei die obere Isolationsschicht (804) eine erste Öffnung (2930) und eine zweite Öffnung (2932) aufweist, die sich dadurch erstrecken; und
wobei die Sammelschienenschicht (802) einen ersten Schichtabschnitt (1081) und einen zweiten Schichtabschnitt (1082) aufweist,
wobei der zweite Schichtabschnitt (1082) von dem ersten Schichtabschnitt (1081) beabstandet ist;
wobei der erste Schichtabschnitt (1081) gegen die negative Elektrode (688) der ersten zylindrischen Batteriezelle (56, 156, 530) und die negative Elektrode (688) der zweiten zylindrischen Batteriezelle (56, 156, 532) angeordnet ist und diese elektrisch kontaktiert;
wobei der zweite Schichtabschnitt (1082) gegen die positive Elektrode (686) der ersten zylindrischen Batteriezelle (56, 156, 530) und die positive Elektrode (686) der zweiten zylindrischen Batteriezelle (56, 156, 532) angeordnet ist und diese elektrisch kontaktiert, so dass die erste und die zweite zylindrische Batteriezelle (56, 156, 530, 532) elektrisch parallel zueinander gekoppelt sind; wobei
die erste und die zweite Öffnung (2930, 2932) der oberen Isolationsschicht (804) so bemessen und geformt sind, dass sie mit der ersten und der zweiten Öffnung (930, 932) der unteren Isolationsschicht (800) übereinstimmen.

2. Batteriemodul (32) nach Anspruch 1, wobei:
der erste Schichtabschnitt (1081) eine erste und eine zweite bogenförmige Aussparung (1130, 1132) aufweist, die sich von einem ersten Rand davon in den ersten Schichtabschnitt (1081) erstrecken,
die erste und die zweite bogenförmige Aussparung (1130, 1132) voneinander beabstandet sind; und
der zweite Schichtabschnitt (1082) eine erste und eine zweite Lasche (1230, 1232) aufweist, die sich in jeweilige Richtung der ersten und der zweiten bogenförmigen Aussparung (1130, 1132) erstrecken.

3. Batteriemodul (32) nach Anspruch 2, wobei:
die erste und die zweite Lasche (1230, 1232) die positive Elektrode (686) der ersten zylindrischen Batteriezelle (56, 156, 530) bzw. die positive Elektrode (686) der zweiten zylindrischen Batteriezelle (56, 156, 532) kontaktieren.

4. Batteriemodul (32) nach Anspruch 3, wobei:
die negative Elektrode (688) der ersten zylindrischen Batteriezelle (56, 156, 530) und die negative Elektrode (688) der zweiten zylindrischen Batteriezelle (56, 156, 532) den ersten Schichtabschnitt (1081) in der Nähe der ersten bzw. der zweiten bogenförmigen Aussparung (1130, 1132) kontaktieren.

5. Batteriemodul (32) nach Anspruch 3, wobei:
die Sammelschienenschicht (802) ferner eine erste und eine zweite äußere Seitenwand (1091, 1092) aufweist, die sich senkrecht zu dem ersten und dem zweiten Schichtabschnitt (1081, 1082) erstrecken,
wobei der erste und der zweite Schichtabschnitt (1081, 1082) zwischen der ersten und der zweiten äußeren Seitenwand (1091, 1092) angeordnet sind; und
eine erste und eine zweite Sammelschiene (811, 812) mit der ersten bzw. der zweiten äußeren Seitenwand (1091, 1092) der Sammelschienenschicht (802) gekoppelt sind.

6. Batteriemodul (32) nach Anspruch 1, wobei:
die erste Öffnung (930) in der unteren Isolationsschicht (800) einen kreisförmigen Öffnungsabschnitt (1060, 3060) und einen schürzenförmigen Öffnungsabschnitt (1062, 3062) aufweist, der mit dem kreisförmigen Öffnungsabschnitt (1060, 3060) in Verbindung steht,
der kreisförmige Öffnungsabschnitt (1060, 3060) mit der positiven Elektrode (686) der ersten zylindrischen Batteriezelle (56, 156, 530) in Verbindung steht, und
der schürzenförmige Öffnungsabschnitt (1062, 3062) mit einem Abschnitt der negativen Elektrode (688) der ersten zylindrischen Batteriezelle (56, 156, 530) in Verbindung steht.

7. Batteriemodul (32) nach Anspruch 1, wobei:
die erste Öffnung (2930) der oberen Isolationsschicht (804) so bemessen und geformt ist, dass sie eine Lasche (1230, 1232) der Sammelschienenschicht (802) freilegt, die die positive Elektrode (686) der ersten zylindrischen Batteriezelle (56, 156, 530) kontaktiert, und einen Abschnitt der Sammelschienenschicht (802) freilegt, die die negative Elektrode (688) der ersten zylindrischen Batteriezelle (56, 156, 530) kontaktiert.

8. Batteriemodul (32) nach Anspruch 7, wobei:
die erste Öffnung (2930) in der oberen Isolationsschicht (804) einen kreisförmigen Öffnungsabschnitt (1060, 3060) und einen schürzenförmigen Öffnungsabschnitt (1062, 3062) aufweist, der mit dem kreisförmigen Öffnungsabschnitt (1060, 3060) in Verbindung steht,
der kreisförmige Öffnungsabschnitt (1060, 3060) die Lasche (1230, 1232) der Sammelschienenschicht (802) freilegt, die die positive Elektrode (686) der ersten zylindrischen Batteriezelle (56, 156, 530) kontaktiert, und
der schürzenförmige Öffnungsabschnitt (1062, 3062) den Abschnitt der Sammelschienenschicht (802) freilegt, der die negative Elektrode (688) der ersten zylindrischen Batteriezelle (56, 156, 530) kontaktiert.

9. Batteriemodul (32) nach Anspruch 8, ferner aufweisend:
eine Sensorschicht (806), die mit der oberen Isolationsschicht (804) gekoppelt ist, wobei die Sensorschicht (806) eine elektrische Leiterbahn (3804) aufweist, die elektrisch mit der positiven Elektrode (686) der ersten zylindrischen Batteriezelle (56, 156, 530) gekoppelt ist.

10. Batteriemodul (32) aufweisend:
eine erste zylindrische Batteriezelle (56, 156, 530, 532) aufweisend eine positive Elektrode (686) und eine negative Elektrode (688);
eine zweite zylindrische Batteriezelle (56, 156, 550, 552) aufweisend eine positive Elektrode (686) und eine negative Elektrode (688);
eine laminierte Sammelschienenanordnung (68, 168) aufweisend eine untere Isolationsschicht (800), eine Sammelschienenschicht (802), eine obere Isolationsschicht (804);
wobei die Sammelschienenschicht (802) mit und zwischen der unteren Isolationsschicht (800) und der oberen Isolationsschicht (804) gekoppelt ist;
wobei die untere Isolationsschicht (800) die erste und die zweite zylindrische Batteriezelle (56, 156, 532) kontaktiert,
wobei die untere Isolationsschicht (800) eine erste Öffnung (930) und eine zweite Öffnung (932) aufweist, die sich dadurch erstrecken,
wobei die erste Öffnung (930) so bemessen und geformt ist, dass sie die positive Elektrode (686) der ersten zylindrischen Batteriezelle (56, 156, 530) dadurch aufnimmt und einen Abschnitt der negativen Elektrode (688) der ersten zylindrischen Batteriezelle (56, 156, 530) freilegt;
wobei die zweite Öffnung (932) so bemessen und geformt ist, dass sie die positive Elektrode (686) der zweiten zylindrischen Batteriezelle (56, 156, 532) dadurch aufnimmt und einen Abschnitt der negativen Elektrode (688) der zweiten zylindrischen Batteriezelle (56, 156, 532) freilegt;
wobei die obere Isolationsschicht (804) eine erste Öffnung (2930) und eine zweite Öffnung (2932) aufweist, die sich dadurch erstrecken; und
wobei die Sammelschienenschicht (802) einen ersten, einen zweiten und einen dritten Schichtabschnitt (1081, 1082, 1083) aufweist, die voneinander beabstandet sind;
wobei der erste Schichtabschnitt (1081) gegen die negative Elektrode (688) der ersten zylindrischen Batteriezelle (56, 156, 530, 532) angeordnet ist und diese elektrisch kontaktiert;
wobei der zweite Schichtabschnitt (1082) gegen die positive Elektrode (686) der ersten zylindrischen Batteriezelle (56, 156, 530, 532) und die negative Elektrode (688) der zweiten zylindrischen Batteriezelle (56, 156, 550, 552) angeordnet ist und diese elektrisch kontaktiert;
wobei der dritte Schichtabschnitt (1083) gegen die positive Elektrode (686) der zweiten zylindrischen Batteriezelle (56, 156, 550, 552) angeordnet ist und diese elektrisch kontaktiert, so dass die erste und die zweite zylindrische Batteriezelle (56, 156, 530, 532, 550, 552) elektrisch in Reihe miteinander gekoppelt sind; wobei
die erste und die zweite Öffnung (2930, 2932) der oberen Isolationsschicht (804) so bemessen und geformt sind, dass sie mit der ersten und der zweiten Öffnung (930, 932) der unteren Isolationsschicht (800) übereinstimmen.

11. Batteriemodul (32) nach Anspruch 10, wobei:
der erste Schichtabschnitt (1081) eine bogenförmige Aussparung (1130, 1132) aufweist, die sich von einem Rand davon in den ersten Schichtabschnitt (1081) erstreckt; und
der zweite Schichtabschnitt (1082) eine Lasche (1230, 1232) und eine bogenförmige Aussparung (1130, 1132) aufweist,
wobei sich die Lasche (1230, 1232) des zweiten Schichtabschnitts (1082) in Richtung der bogenförmigen Aussparung (1130, 1132) des ersten Schichtabschnitts (1081) erstreckt,
wobei sich die bogenförmige Aussparung (1130, 1132) des zweiten Schichtabschnitts (1082) von einem Rand davon in den zweiten Schichtabschnitt (1082) erstreckt; und
der dritte Schichtabschnitt (1083) eine Lasche (1230, 1232) aufweist, die sich in Richtung der bogenförmigen Aussparung (1130, 1132) des zweiten Schichtabschnitts (1082) erstreckt.

12. Batteriemodul (32) nach Anspruch 11, wobei:
die negative Elektrode (688) der ersten zylindrischen Batteriezelle (56, 156, 530) den ersten Schichtabschnitt (1081) in der Nähe der bogenförmigen Aussparung (1130, 1132) des ersten Schichtabschnitts (1081) kontaktiert;
die Lasche (1230, 1232) des zweiten Schichtabschnitts (1082) die positive Elektrode (686) der ersten zylindrischen Batteriezelle (56, 156, 530) kontaktiert;
die negative Elektrode (688) der zweiten zylindrischen Batteriezelle (56, 156, 532) den zweiten Schichtabschnitt (1082) in der Nähe der bogenförmigen Aussparung (1130, 1132) des zweiten Schichtabschnitts (1082) kontaktiert; und
die Lasche (1230, 1232) des dritten Schichtabschnitts (1083) die positive Elektrode (686) der zweiten zylindrischen Batteriezelle (56, 156, 532) kontaktiert.

13. Batteriemodul (32) nach Anspruch 10, wobei:
die Sammelschienenschicht (802) ferner eine erste und eine zweite äußere Seitenwand (1091, 1092) aufweist, die sich senkrecht zu dem ersten und dem zweiten Schichtabschnitt (1081, 1082) erstrecken,
wobei der erste und der zweite Schichtabschnitt (1081, 1082) zwischen der ersten und der zweiten äußeren Seitenwand (1091, 1092) angeordnet sind; und
eine erste und eine zweite Sammelschiene (811, 812) mit der ersten bzw. der zweiten äußeren Seitenwand (1091, 1092) der Sammelschienenschicht (802) gekoppelt sind.

14. Batteriemodul (32) nach Anspruch 10, wobei:
die erste Öffnung (930) in der unteren Isolationsschicht (800) einen kreisförmigen Öffnungsabschnitt (1060, 3060) und einen schürzenförmigen Öffnungsabschnitt (1062, 3062) aufweist, der mit dem kreisförmigen Öffnungsabschnitt (1060, 3060) in Verbindung steht,
der kreisförmige Öffnungsabschnitt (1060, 3060) mit der positiven Elektrode (686) der ersten zylindrischen Batteriezelle (56, 156, 530, 532) in Verbindung steht, und
der schürzenförmige Öffnungsabschnitt (1062, 3062) mit einem Abschnitt der negativen Elektrode (688) der ersten zylindrischen Batteriezelle (56, 156, 530, 532) in Verbindung steht.

15. Batteriemodul (32) nach Anspruch 10, wobei:
die erste Öffnung (2930) der oberen Isolationsschicht (804) so bemessen und geformt ist, dass sie eine Lasche (1230, 1232) der Sammelschienenschicht (802) freilegt, die die positive Elektrode (686) der ersten zylindrischen Batteriezelle (56, 156, 530) kontaktiert, und einen Abschnitt der Sammelschienenschicht (802) freilegt, die die negative Elektrode (688) der ersten zylindrischen Batteriezelle (56, 156, 530) kontaktiert.

16. Batteriemodul (32) nach Anspruch 15, wobei:
die erste Öffnung (930) in der oberen Isolationsschicht (804) einen kreisförmigen Öffnungsabschnitt (1060, 3060) und einen schürzenförmigen Öffnungsabschnitt (1062, 3062) aufweist, der mit dem kreisförmigen Öffnungsabschnitt (1060, 3060) in Verbindung steht,
der kreisförmige Öffnungsabschnitt (1060, 3060) die Lasche (1230, 1232) der Sammelschienenschicht (802) freilegt, die die positive Elektrode (686) der ersten zylindrischen Batteriezelle (56, 156, 530) kontaktiert, und
der schürzenförmige Öffnungsabschnitt (1062, 3062) den Abschnitt der Sammelschienenschicht (802) freilegt, der die negative Elektrode (688) der ersten zylindrischen Batteriezelle (56, 156, 530) kontaktiert.

17. Batteriemodul (32) nach Anspruch 15, ferner aufweisend:
eine Sensorschicht (806), die mit der oberen Isolationsschicht (804) gekoppelt ist, wobei die Sensorschicht (806) eine elektrische Leiterbahn (3804) aufweist, die elektrisch mit der positiven Elektrode (686) der ersten zylindrischen Batteriezelle (56, 156, 530) gekoppelt ist.

## Revendications

1. Module de batterie (32) comprenant :
une première cellule de batterie cylindrique (56, 156, 530) comportant une électrode positive (686) et une électrode négative (688) ;
une deuxième cellule de batterie cylindrique (56, 156, 532) comportant une électrode positive (686) et une électrode négative (688) ;
un ensemble de barre omnibus stratifiée (68, 168) comportant une couche isolante inférieure (800), une couche de barre omnibus (802), une couche isolante supérieure (804) ;
la couche de barre omnibus (802) étant couplée à la couche isolante inférieure (800) et la couche isolante supérieure (804) et entre ces dernières ; la couche isolante inférieure (800) étant en contact avec les première et deuxième cellules de batterie cylindriques (56, 156, 532),
la couche isolante inférieure (800) possédant une première ouverture (930) et une deuxième ouverture (932) s'étendant à travers celle-ci,
la première ouverture (930) de la couche isolante inférieure (800) étant dimensionnée et profilée pour recevoir l'électrode positive (686) de la première cellule de batterie cylindrique (56, 156, 530) à travers celle-ci, et pour exposer une partie de l'électrode négative (688) de la première cellule de batterie cylindrique (56, 156, 530) ;
la deuxième ouverture (932) de la couche isolante inférieure (800) étant dimensionnée et profilée pour recevoir l'électrode positive (686) de la deuxième cellule de batterie cylindrique (56, 156, 532) à travers celle-ci, et pour exposer une partie de l'électrode négative (688) de la deuxième cellule de batterie cylindrique (56, 156, 532) ;
la couche isolante supérieure (804) possédant une première ouverture (2930) et une deuxième ouverture (2932) s'étendant à travers celle-ci; et
la couche de barre omnibus (802) possédant une première partie de la couche (1081) et une deuxième partie de la couche (1082),
la deuxième partie de couche (1082) étant espacée de la première partie de couche (1081) ;
la première partie de couche (1081) étant disposée contre l'électrode négative (688) de la première cellule de batterie cylindrique (56, 156, 530) et l'électrode négative (688) de la deuxième cellule de batterie cylindrique (56, 156, 532), et en contact électrique avec celles-ci ;
la deuxième partie de couche (1082) étant disposée contre l'électrode positive (686) de la première cellule de batterie cylindrique (56, 156, 530) et l'électrode positive (686) de la deuxième cellule de batterie cylindrique (56, 156, 532), et en contact électrique avec celles-ci, de sorte que les première et deuxième cellules de batterie cylindrique (56, 156, 530, 532) soient couplées électriquement et parallèles entre elles ;
les première et deuxième ouvertures (2930, 2932) de la couche isolante supérieure (804) étant dimensionnées et profilées pour correspondre aux première et deuxième ouvertures (930, 932) de la couche isolante inférieure (800).

2. Module de batterie (32) selon la revendication 1,
la première partie de couche (1081) possédant des première et seconde fentes arquées (1130, 1132) s'étendant d'un premier bord de celle-ci jusque dans la première partie de couche (1081),
les première et deuxième fentes arquées (1130, 1132) étant espacées l'une de l'autre ; et
la deuxième partie de couche (1082) possédant des première et deuxième languettes (1230, 1232) s'étendant vers les première et deuxième fentes arquées (1130, 1132) respectivement.

3. Module de batterie (32) selon la revendication 2,
les première et deuxième languettes (1230, 1232) étant au contact de l'électrode positive (686) de la première cellule de batterie cylindrique (56, 156, 530) et de l'électrode positive (686) de la deuxième cellule de batterie cylindrique (56, 156, 532) respectivement.

4. Module de batterie (32) selon la revendication 3,
l'électrode négative (688) de la première cellule de batterie cylindrique (56, 156, 530) et l'électrode négative (688) de la deuxième cellule de batterie cylindrique (56, 156, 532) étant au contact de la première partie de couche (1081) à proximité des premières et deuxièmes fentes arquées (1130, 1132) respectivement.

5. Module de batterie (32) selon la revendication 3,
la couche de barre omnibus (802) possédant en outre des première et seconde parois latérales extérieures (1091, 1092) qui s'étendent perpendiculairement aux première et deuxième parties de couche (1081, 1082),
les première et deuxième parties de couche (1081, 1082) étant disposées entre les première et deuxième parois latérales extérieures (1091, 1092) ; et
les première et deuxième barres omnibus (811, 812) étant couplées aux première et deuxième parois latérales extérieures (1091, 1092), respectivement, de la couche de barre omnibus (802).

6. Module de batterie (32) selon la revendication 1,
la première ouverture (930) de la couche isolante inférieure (800) possédant une partie d'ouverture circulaire (1060, 3060) et une partie d'ouverture en forme de jupe (1062, 3062) communiquant avec la partie d'ouverture circulaire (1060, 3060),
la partie d'ouverture circulaire (1060, 3060) communiquant avec l'électrode positive (686) de la première cellule de batterie cylindrique (56, 156, 530), et
la partie d'ouverture en forme de jupe (1062, 3062) communiquant avec une partie de l'électrode négative (688) de la première cellule de batterie cylindrique (56, 156, 530).

7. Module de batterie (32) selon la revendication 1,
la première ouverture (2930) de la couche isolante supérieure (804) étant dimensionnée et profilée pour exposer d'une part une languette (1230, 1232) de la couche de barre omnibus (802) au contact de l'électrode positive (686) de la première cellule de batterie cylindrique (56, 156, 530) à travers celle-ci, d'autre part une partie de la couche de barre omnibus (802) au contact de l'électrode négative (688) de la première cellule de batterie cylindrique (56, 156, 530).

8. Module de batterie (32) selon la revendication 7,
la première ouverture (2930) de la couche isolante supérieure (804) possédant une partie d'ouverture circulaire (1060, 3060) et une partie d'ouverture en forme de jupe (1062, 3062) communiquant avec la partie d'ouverture circulaire (1060, 3060),
la partie d'ouverture circulaire (1060, 3060) exposant la languette (1230, 1232) de la couche de barre omnibus (802) située au contact de l'électrode positive (686) de la première cellule de batterie cylindrique (56, 156, 530), et
la partie d'ouverture en forme de jupe (1062, 3062) exposant la partie de la couche de barre omnibus (802) située au contact de l'électrode négative (688) de la première cellule de batterie cylindrique (56, 156, 530).

9. Bloc-batterie (32) selon la revendication 8, comprenant en outre,
une couche de capteur (806) couplée à la couche isolante supérieure (804), la couche de capteur (806) présentant un tracé électrique (3804) couplé électriquement à l'électrode positive (686) de la première cellule de batterie cylindrique (56, 156, 530).

10. Module de batterie (32) comprenant :
une première cellule de batterie cylindrique (56, 156, 530, 532) possédant une électrode positive (686) et une électrode négative (688) ;
une deuxième cellule de batterie cylindrique (56, 156, 550, 552) possédant une électrode positive (686) et une électrode négative (688) ;
un ensemble de barre omnibus stratifiée (68, 168) possédant une couche isolante inférieure (800), une couche de barre omnibus (802), une couche isolante supérieure (804) ;
la couche de barre omnibus (802) étant couplée à la couche isolante inférieure (800) et la couche isolante supérieure (804), et entre ces dernières ;
la couche isolante inférieure (800) étant en contact avec les première et deuxième cellules de batterie cylindriques (56, 156, 532),
la couche isolante inférieure (800) possédant une première ouverture (930) et une deuxième ouverture (932) s'étendant à travers celle-ci,
la première ouverture (930) étant dimensionnée et profilée pour recevoir l'électrode positive (686) de la première cellule de batterie cylindrique (56, 156, 530) à travers celle-ci, et pour exposer une partie de l'électrode négative (688) de la première cellule de batterie cylindrique (56, 156, 530) ;
la deuxième ouverture (932) étant dimensionnée et profilée pour recevoir l'électrode positive (686) de la deuxième cellule de batterie cylindrique (56, 156, 532) à travers celle-ci, et pour exposer une partie de l'électrode négative (688) de la deuxième cellule de batterie cylindrique (56, 156, 532) ;
la couche isolante supérieure (804) possédant une première ouverture (2930) et une deuxième ouverture (2932) s'étendant à travers celle-ci; et
la couche de barre omnibus (802) possédant des première, deuxième et troisième parties de couche (1081, 1082, 1083) espacées les unes des autres ;
la première partie de couche (1081) étant disposée contre l'électrode négative (688) de la première cellule de batterie cylindrique (56, 156, 530, 532), et en contact électrique avec celle-ci;
la deuxième partie de couche (1082) étant disposée contre l'électrode positive (686) de la première cellule de batterie cylindrique (56, 156, 530, 532) et l'électrode négative (688) de la deuxième cellule de batterie cylindrique (56, 156, 550, 552), et en contact électrique avec celles-ci ;
la troisième partie de couche (1083) étant disposée contre l'électrode positive (686) de la deuxième cellule de batterie cylindrique (56, 156, 550, 552), et en contact électrique avec celle-ci, de sorte que les première et deuxième cellules de batterie cylindrique (56, 156, 530, 532, 550, 552) soient couplées électriquement en série l'une à l'autre;
les première et deuxième ouvertures (2930, 2932) de la couche isolante supérieure (804) étant dimensionnées et profilées pour correspondre aux première et deuxième ouvertures (930, 932) de la couche isolante inférieure (800).

11. Module de batterie (32) selon la revendication 10,
la première partie de couche (1081) possédant une fente arquée (1130, 1132) s'étendant d'un bord de celle-ci dans la première partie de couche (1081); et
la deuxième partie de couche (1082) possédant une languette (1230, 1232) et une fente arquée (1130, 1132),
la languette (1230, 1232) de la deuxième partie de couche (1082) s'étendant vers la fente arquée (1130, 1132) de la première partie de couche (1081),
la fente arquée (1130, 1132) de la deuxième partie de couche (1082) s'étendant d'un bord de celle-ci à la deuxième partie de couche (1082); et
la troisième partie de couche (1083) possédant une languette (1230, 1232) s'étendant vers la fente arquée (1130, 1132) de la deuxième partie de couche (1082).

12. Module de batterie (32) selon la revendication 11,
l'électrode négative (688) de la première cellule de batterie cylindrique (56, 156, 530) se trouvant au contact de la première partie de couche (1081) à proximité de la fente arquée (1130, 1132) de la première partie de couche (1081);
la languette (1230, 1232) de la deuxième partie de couche (1082) située au contact de l'électrode positive (686) de la première cellule de batterie cylindrique (56, 156, 530);
l'électrode négative (688) de la deuxième cellule de batterie cylindrique (56, 156, 532) située au contact de la deuxième partie de couche (1082) à proximité de la fente arquée (1130, 1132) de la deuxième partie de couche (1082);
la languette (1230, 1232) de la troisième partie de couche (1083) située au contact de l'électrode positive (686) de la deuxième cellule de batterie cylindrique (56, 156, 532);

13. Module de batterie (32) selon la revendication 10,
la couche de barre omnibus (802) possédant en outre des première et deuxième parois latérales extérieures (1091, 1092) qui s'étendent perpendiculairement aux première et deuxième parties de couche (1081, 1082),
les première et deuxième parties de couche (1081, 1082) étant disposées entre les première et deuxième parois latérales extérieures (1091, 1092) ; et
les première et deuxième barres omnibus (811, 812) étant couplées aux première et deuxième parois latérales extérieures (1091, 1092), respectivement, de la couche de barre omnibus (802).

14. Module de batterie (32) selon la revendication 10,
la première ouverture (930) dans la couche isolante inférieure (800) possédant une partie d'ouverture circulaire (1060, 3060) et une partie d'ouverture en forme de jupe (1062, 3062) communiquant avec la partie d'ouverture circulaire (1060, 3060),
la partie d'ouverture circulaire (1060, 3060) communiquant avec l'électrode positive (686) de la première cellule de batterie cylindrique (56, 156, 530, 532), et
la partie d'ouverture en forme de jupe (1062, 3062) communiquant avec une partie de l'électrode négative (688) de la première cellule de batterie cylindrique (56, 156, 530, 532).

15. Module de batterie (32) selon la revendication 10,
la première ouverture (2930) de la couche isolante supérieure (804) étant dimensionnée et profilée pour exposer d'une part une languette (1230, 1232) de la couche de barre omnibus (802) au contact de l'électrode positive (686) de la première cellule de batterie cylindrique (56, 156, 530) à travers celle-ci, d'autre part une partie de la couche de barre omnibus (802) au contact de l'électrode négative (688) de la première cellule de batterie cylindrique (56, 156, 530).

16. Module de batterie (32) selon la revendication 15,
la première ouverture (930) de la couche isolante supérieure (804) possédant une partie d'ouverture circulaire (1060, 3060) et une partie d'ouverture en forme de jupe (1062, 3062) communiquant avec la partie d'ouverture circulaire (1060, 3060),
la partie d'ouverture circulaire (1060, 3060) exposant la languette (1230, 1232) de la couche de barre omnibus (802) située au contact de l'électrode positive (686) de la première cellule de batterie cylindrique (56, 156, 530), et
la partie d'ouverture en forme de jupe (1062, 3062) exposant la partie de la couche de barre omnibus (802) située au contact de l'électrode négative (688) de la première cellule de batterie cylindrique (56, 156, 530).

17. Bloc-batterie (32) selon la revendication 15, comprenant en outre,
une couche de capteur (806) couplée à la couche isolante supérieure (804), la couche de capteur (806) présentant un tracé électrique (3804) couplé électriquement à l'électrode positive (686) de la première cellule de batterie cylindrique (56, 156, 530).
